# EUROPEAN PATENT SPECIFICATION

(11) **EP 2 960 971 B1**
(45) Date of publication and mention of the grant of the patent: **22.04.2020**
(21) Application number: 14754385.4
(22) Date of filing: 21.02.2014
(51) Int. Cl.: H01M 4/587, H01M 4/36, H01M 4/48, H01M 4/133, H01M 4/134, H01M 4/62

(54) **COMPOSITE ACTIVE MATERIAL FOR LITHIUM SECONDARY BATTERY AND METHOD FOR PRODUCING SAME**
AKTIVMATERIALVERBUNDSTOFF FÜR LITHIUM-SEKUNDÄRBATTERIEN UND VERFAHREN ZUR HERSTELLUNG DAVON
SUBSTANCE ACTIVE COMPOSITE POUR BATTERIE SECONDAIRE AU LITHIUM AINSI QUE PROCÉDÉ DE PRODUCTION DE CELLE-CI

(30) Priority: 21.02.2013 JP 2013032671
(43) Date of publication of application: 30.12.2015
(73) Proprietor: Connexx Systems Corporation, Kyoto-shi, Kyoto 602-0841 (JP)
(72) Inventor: TAMAKI Ryo, Kyoto-shi Kyoto 602-0841 (JP); KACHI Naoyoshi, Sakai-shi Osaka 599-8128 (JP)
(74) Representative: Qip Patentanwälte Dr. Kuehn & Partner mbB
(86) International application number: PCT/JP2014/054203
(87) International publication number: WO 2014/129594

(56) References cited:
- WO-A1-2008/093724
- JP-A- 2000 264 614
- JP-A- 2005 174 630
- JP-A- 2005 174 847
- JP-A- 2007 141 573
- JP-A- 2008 034 369
- JP-A- 2008 277 231
- JP-A- 2012 113 823
- JP-A- 2013 008 526
- US-A1- 2002 164 479
- US-A1- 2006 166 098
- US-A1- 2007 122 700
- US-A1- 2010 143 798
- US-A1- 2010 273 058
- US-A1- 2012 115 033
- US-A1- 2012 321 953

## Description

### TECHNICAL FIELD

The present invention relates to a composite active material for lithium secondary batteries and a method for producing the same.

### BACKGROUND ART

With reduction in size and weight of electronic materials, and progress of the development of HEV and EV, requests for batteries having large capacity, high-speed charge and discharge characteristics, good cycle characteristics, and excellent safety are increasing. Among them, lithium ion secondary batteries (lithium secondary batteries) have attracted attention as the most promising battery.

However, as the premises for developing a lithium secondary battery exhibiting excellent performances, negative electrode materials, positive electrode materials, electrolytes, separators, current collectors and the like having high performances must be developed, and a battery sufficiently utilizing their characteristics must be designed.

In particular, negative electrode materials determine the basic battery characteristics, thus materials with improved characteristics such as charge-discharge capacity have been actively developed. More specifically, while the conventional negative electrode material mainly used a carbon material such as graphite powder whose theoretical electric capacity of graphite is 372 mAh/g, a combined use with other materials with theoretical electric capacities higher than graphite (for example, silicon, tin, aluminium and the like) has been attempted, in order to obtain the higher charge-discharge capacity.

For example, Patent Literature 1 discloses a composite material of graphite and Si obtained by mixing flake graphite and silicon powder and pulverizing and granulating the mixture in a high-speed air stream. In addition, Patent Literature 2 discloses a material obtained by mixing exfoliated graphite flakes and a metal such as tin.

### CITATION LIST

### PATENT LITERATURE

Patent Literature 1: JP 2008-27897 A
Patent Literature 2: US 2009/0117466 A

US 2010/0273058 A1 discloses a negative active material for a lithium secondary battery, a method for preparing the same, a negative electrode comprising the same and a lithium secondary battery comprising the same.

US 2012/0321953 A1 discloses a graphene-enabled vanadium oxide cathode and lithium cells containing same.

### SUMMARY OF INVENTION

### TECHNICAL PROBLEMS

As described above, in recent years, requests for the improved characteristics of battery materials are greatly increasing and, for example, the required levels for not only charge-discharge capacity, but also cycle characteristics are greatly rising.

The present inventors have studied performances of lithium secondary batteries using the materials (composite active material) described in Patent Literatures 1 and 2 described above, and in the studies, rapid capacity deteriorations have been consequently observed after several cycles or several tens of cycles in both lithium secondary batteries using those materials. Thus further improvement was required. This is probably because the battery active material that is capable of combining with lithium ions such as Si, for example, is pulverized with the progress of the cycles, and loses electron conductivity due to delamination from the material or the like.

In recent years, from the viewpoint of the use safety of the battery, it has been required the volume of an electrode material does not expand even after repetition of charge-discharge cycles. When the volume expansion of the electrode material is enlarged, then an electrolyte leaks or battery life decreases. In addition, energy density per volume decreases, and there are no advantages of using a high-capacity material.

In consideration of the above actual circumstances, an object of a first aspect of the present invention is to provide a composite active material for lithium secondary batteries capable of preparing a lithium secondary battery having large charge-discharge capacity, high-speed charge and discharge characteristics, and good cycle characteristics, and a method for producing the same.

In addition, an object of the first aspect of the present invention is to provide a battery using the composite active material for lithium secondary batteries.

In consideration of the above actual circumstances, an object of a second aspect of the present invention is to provide a composite active material for lithium secondary batteries capable of preparing an electrode material in which the volume expansion is suppressed even after repetition of charge-discharge cycles and capable of preparing a lithium secondary battery having good cycle characteristics, and a method for producing the same.

In addition, an object of the second aspect of the present invention is to provide a battery using the composite active material for lithium secondary batteries.

### SOLUTION TO PROBLEMS

As a result of intensive studies on the prior art, the present inventors have found that an insufficient adhesion between the battery active material and the graphite is a problem, and have found that the problem of the first aspect can be solved by the constitution as defined in the independent claims. Advantageous embodiments are defined in the dependent claims.

### BRIEF DESCRIPTION OF DRAWINGS

[FIG. 1] FIG. 1 is a secondary electron image (accelerating voltage of 5 kV, magnification: 3000 times) by SEM (scanning electron microscope) of a composite active material for lithium secondary batteries prepared in Example 1.
[FIG. 2] FIG. 2 is a secondary electron image (accelerating voltage of 8 kV, magnification: 3000 times) by SEM (scanning electron microscope) of a cross section of the composite active material for lithium secondary batteries prepared in Example 1.
[FIG. 3] FIG. 3 is a secondary electron image (accelerating voltage of 10 kV, magnification: 3700 times) by SEM (scanning electron microscope) of a cross section of a composite active material for lithium secondary batteries prepared in Comparative Example 1.

### DESCRIPTION OF EMBODIMENTS

Hereinbelow, a first aspect and a second aspect of the present invention will be sequentially described in detail.

### <<First aspect>>

Hereinbelow, a composite active material for lithium secondary batteries and a method for producing the same according to the first aspect of the present invention will be described in detail.

First, the composite active material for lithium secondary batteries (hereinafter, simply referred to as a composite active material) according to the first aspect of the present invention will be described in detail.

As one of the features of the composite active material for lithium secondary batteries according to the first aspect of the present invention, it is pointed out that the composite active material for lithium secondary batteries is constituted by flat particles having any of a rounded disk shape, a flattened ellipsoidal body shape, or a broad bean-type shape; the flat particles include at least one structure in which particles of a battery active material capable of combining with lithium ions are sandwiched between folds consisting of graphite; the battery active material capable of combining with lithium ions has an average particle diameter of 1 µm or less; some of the folds consisting of graphite are inclined from a vertical axis direction of a flat surface in a cross section vertical to the flat surface of the flat particles, the some of the folds being positioned other than at a vicinity of both ends in the longitudinal direction in the cross section; and the structure in which the particles of the battery active material capable of combining with lithium ions are sandwiched between the folds consisting of graphite has an orientation that is generally parallel with the flat surface.

Since the composite active material has the rounded flat shape from these features, it can be applied at high density while increasing fluidity of the particles as an electrode material without having a sharp edge (ridge and weave) generally found in crushed particles, and it is possible to suppress the decomposition of an electrolyte solution when being used as a battery.

Here, the rounded disk shape indicates that a substantially disk shape is exhibited when particles are placed on a flat surface and then observed from above using a scanning electron microscope or the like and that upper and lower circumference of the disk are formed in a rounded shape. The flattened ellipsoidal body indicates that a revolving ellipsoidal body is flattened. The broad bean-type shape indicates that the central portion of particles is recessed, circumferential corners are rounded and thus are thicker than the central portion, or the circumference is distorted when the particles are placed on a flat surface and then observed from above using a scanning electron microscope or the like.

With respect to the size of the flat particles constituting the composite active material according to the first aspect of the present invention, the flat particles preferably have an average thickness of 2 to 30 µm, and preferably have an average diameter of 4 to 60 µm.

The flat particles constituting the composite active material according to the first aspect of the present invention include at least one structure in which particles of the battery active material capable of combining with lithium ions are sandwiched between the folds consisting of graphite. An average thickness of the folds consisting of graphite is preferably 0.1 µm or less, but is preferably 40 nm or less and is further preferably 22 nm or less in that the charge-discharge capacity and cycle characteristics of the lithium secondary battery using the composite active material for lithium secondary batteries are more excellent. The lower limit is not particularly limited, but the average thickness is generally 4 nm or more since the production procedure is complicated.

The average particle diameter of the battery active material according to the first aspect of the present invention is necessary to be 1 µm or less, more preferably 0.5 µm or less, and further preferably 0.1 µm or less, in that falling off of the battery active material upon complexation of graphite with the battery active material and expansion failure of the battery active material with cycles and the like are suppressed. The lower limit is not particularly limited, but the smaller is preferable. In the usual pulverization method, it is possible to produce a fine powder to an average particle diameter of about 0.01 µm, and a powder having a particle diameter in this range can be effectively used.

In particular, as the battery active material, silicon particles are preferred, and silicon particles having an average particle diameter of 100 nm or less (particularly preferably, average particle diameter of 50 nm or less) are particularly preferred. As will be described below, as the silicon particles, silicon particles can be used which are obtained by subjecting silicon monoxide to a heating treatment to form a composite containing silicon particles and the silicon dioxide and removing the silicon dioxide from the composite. In addition, silicon particles obtained by reducing silicon dioxide particles using a reducing agent can be used.

Here, the average particle diameter of the battery active material is set to a volume-based particle size distribution value of 50%. The average particle diameter of the battery active material is obtained in such a manner that at least 100 or more battery active materials are observed in a cross section of the composite active material for lithium secondary batteries observed by a scanning electron microscope (SEM) at an accelerating voltage of 10 kV or less, the particle diameter is calculated by image analysis, and the calculated value is obtained on the basis of the volume. When the particle diameter is not a true circle shape (for example, ellipsoidal shape), a long diameter is used as a particle diameter (diameter).

As a method of observing the cross section of the composite active material for lithium secondary batteries, there is a method for polishing the cross section by burying the composite active material in a resin. For example, there is a method in which the composite active material is cured with a resin for fixing a microscope sample, and then subjected to polishing with No. 400 sandpaper and then subjected to polishing with No. 1500 sandpaper, and then subjected to polishing with No. 2000 sandpaper. Thereafter, the composite active material is polished with 0.5 µm alumina polishing agent, and finally polished with 0.02 µm diamond paste, thereby exposing the cross section of the composite active material.

Note that the volume-based particle size distribution value of 50% means a diameter to which a height of 50% is applied in a cumulative distribution diagram (on the basis of the volume, accumulated from a small particle diameter) obtained by a particle size distribution measurement. That is, it is intended to be a particle diameter (D50) at a position of 50% measured from a small diameter side in the volume-based particle size distribution.

The volume-based particle size distribution value of 50% of the battery active material is obtained by observing the cross section of the composite active material for lithium secondary batteries in the above description, but since the size of the battery active material is not nearly changed in producing steps to be described below, for example, the average particle diameter of a pre-production silicon raw material may be measured by a laser diffraction-type particle size distribution analyzer.

The particles of the battery active material capable of combining with lithium ions are sandwiched between the folds consisting of graphite, but the particles of the battery active material may be connected to each other or separated from each other. In order to ensure good conductivity even after repetition of contraction due to expansion and release by the combination of the lithium ions, it is preferable that the particles be uniformly contained in the gap.

A surface viewed from the above in a state where flat particles are placed on an even surface is referred to as a flat surface, and when the flat particles constituting the composite active material according to the first aspect of the present invention are observed in a cross section vertical to the flat surface, some of the flat particles are inclined from a vertical axis direction of the flat surface, the some of the flat particles being positioned other than at a vicinity of both ends in the longitudinal direction in the cross section of the flat particles, and it is preferable that the structures in which the particles of the battery active material capable of combining with lithium ions are sandwiched between the folds consisting of graphite are stacked from the top to the bottom in parallel generally with the flat surface. Since the orientation of the structure in which the particles of the battery active material capable of combining with lithium ions are sandwiched between the folds consisting of graphite is aligned, there is no large pores, and the structures in which the particles of the battery active material capable of combining with lithium ions are sandwiched between the folds consisting of graphite can be stacked at close intervals, thereby increasing the density of the composite active material.

Here, the fact that the structures in which the particles of the battery active material capable of combining with lithium ions are sandwiched between the folds consisting of graphite are stacked in parallel generally with the flat surface means that the orientation of the center axis of the structure in which the particles of the battery active material capable of combining with lithium ions are sandwiched between the folds consisting of graphite are stacked is in the range of ± 30 degrees with respect to the flat surface.

The structure in which the particles of the battery active material capable of combining with lithium ions are sandwiched between the folds consisting of graphite has preferably a thickness of 1 µm to 20 µm, and has more preferably a thickness of 2 to 10 µm. In addition, the folds in the above structure may be closed if possible, and in the vicinity of the center axis of the flat particle, the orientation of the folds is more preferably in the range of 30 degrees with respect to the flat surface, excluding upper and lower portions of 10%.

In the vicinity of both ends in the longitudinal direction in the cross section of the flat particles constituting the composite active material according to the first aspect of the present invention, the orientation of the structure in which the particles of the battery active material capable of combining with lithium ions are sandwiched between the folds consisting of graphite or the orientation of the outermost circumferential fold consisting of graphite is parallel with an outer circumference, and the outermost portion is preferably constituted by graphite bulk even in any case. Here, the orientation of the structure in which the particles of the battery active material capable of combining with lithium ions are sandwiched between the folds consisting of graphite or the orientation of the outermost circumferential fold consisting of graphite is assumed as an orientation of a long axis when the cross section of the flat particles are polished in a state where the flat particles are buried in a resin and are then observed at magnification (for example, 2000 to 5000 times) capable of observing the particles one by one using the scanning electron microscope (SEM) and an area in which orientations are aligned is marked.

The area ratio of the particle layer of the battery active material exposed to the surface of the composite active material according to the first aspect of the present invention and being capable of combining with lithium ions, as measured by scanning electron microscope (SEM) observation at an accelerating voltage of 10 kV or less, is not more than 5%. Among them, the area ratio is preferably 2% or less, and more preferably 1% or less. The lower limit is not particularly limited. When the area ratio is within the above range, the amount of the battery active material exposed to the surface of the composite active material is small, and the composite active material is consequently excellent in cycle characteristics and the like.

When the area ratio is outside the above range, falling off of the battery active material is likely to occur, and the composite active material is inferior in cycle characteristics.

Here, as a method of measuring the area ratio of the particle layer of the battery active material which is exposed to the surface of the composite active material according to the first aspect of the present invention and is capable of combining with lithium ions, at least 100 or more composite active materials are observed by a scanning electron microscope (SEM) at an accelerating voltage of 10 kV or less (preferably, magnification of 2000 times or more), the area ratio of the particle layer of the battery active material occupied on the surface of each composite active material is measured, and the arithmetic mean of these values is calculated.

The battery active material (preferably, the negative electrode active material) capable of combining with lithium ions used in the first aspect of the present invention may be any material that can combine with lithium ions and occlude and release lithium ions (for example, metals, carbides, nitrides and oxides of metals). For example, the battery active material is a metal or non-metal capable of absorbing and discharging lithium ions or a metal oxide capable of alloying with lithium.

The battery active material preferably contains at least one element selected from the group consisting of elements of Group 13 on a periodic table, elements of Group 14 on the periodic table, elements of Group 15 on the periodic table, magnesium, and manganese, and more specifically, may contain metals such as Si, Sn, Al, Sb, Zn, Bi, Cd, Pb, In, Ag, Ga, and Ge (metals capable of alloying with lithium) or alloys containing these metals (for example, Si alloys, Sb alloys, Sn alloys, and In alloys), metal oxides such as SnO and SnO₂ (metal oxides capable of alloying with lithium) or the like. Among them, the battery active material preferably contains at least one element selected from the group consisting of Si, Sn, Al, Sb, and In, and more preferably contains elements of Si and Sn, in that the discharge capacity and cycle characteristics of the lithium secondary battery obtained by using the obtained composite active material for lithium secondary batteries are more excellent.

The alloy may be an alloy containing a metal that does not occlude and release lithium ions, other than an alloy made of the metal combination described above. In this case, it is preferred that the content of the metal capable of alloying with lithium in the alloy is higher. Judging from uniformity and cycle characteristics of the particles determined by the secondary electron image obtained by SEM observation, the upper limit of the metal content is preferably 70% by mass and more preferably 60% by mass or less.

The shape of the used battery active material is not particularly limited, and any shapes such as powder, plate-like, granular, fibrous, bulk, and spherical can be used.

In the case of using Si as the battery active material, when the content of Si in the composite active material is set to 30% by mass, the charge-discharge capacity derived from only Si is 1200 mAh/g or so.

The particle diameter of the composite active material (D50: volume-based particle size distribution value of 50%) according to the first aspect of the present invention is not particularly limited, but is preferably 2 to 40 µm, more preferably 2 to 35 µm, and further preferably 2 to 30 µm, in that cycle characteristics of a lithium secondary battery using the obtained composite active material are more excellent.

The particle diameter (D90: volume-based particle size distribution value of 90%) is not particularly limited, but is preferably 10 to 60 µm, and more preferably 10 to 45 µm, in that cycle characteristics of a lithium secondary battery using the obtained composite active material are more excellent.

Furthermore, the particle diameter (D10: volume-based particle size distribution value of 10%) is not particularly limited, but is preferably 1 to 20 µm, and more preferably 1 to 10 µm, in that cycle characteristics of a lithium secondary battery using the obtained composite active material are more excellent.

D10, D50 and D90 respectively correspond to a particle diameter at the 10% cumulative, 50% cumulative and 90% cumulative from the fine particle side of the cumulative particle size distribution measured by a laser diffraction scattering method.

In the measurement, the composite active material is added to a liquid and mixed by using ultrasonic wave and the like, the prepared dispersion is introduced to an apparatus as a sample, and the measurement is performed. As the liquid, water, alcohol or a low-volatile organic solvent is preferably used in terms of operation. At this time, the obtained particle size distribution diagram preferably exhibits a normal distribution.

The bulk density of the composite active material is not particularly limited, but is preferably 0.5 g/cm³ or more, and more preferably 0.7 g/cm³, in order to increase the capacity per volume of the obtained composite active material. The upper limit is not particularly limited.

The method of measuring the bulk density is the same as the method of measuring the bulk density of the graphite described above, except using a 25 mL measuring cylinder.

The tap density of the composite active material is not particularly limited, but is preferably 0.8 g/cm³ or more and more preferably 1.0 g/cm³ or more, in order to increase the capacity per volume of the obtained composite active material. The upper limit is not particularly limited, but is preferably 1.6 g/cm³ or less.

As the method of measuring the tap density, a sample is placed in a 25 mL measuring cylinder and is subjected to tapping, and the sample weight at the time that the capacity change is lost is divided by the sample volume.

The specific surface area (BET specific surface area) of the composite active material is not particularly limited, but is preferably 100 m²/g or less and more preferably 50 m²/g or less, in that cycle characteristics of a lithium secondary battery using the obtained composite active material are more excellent. The lower limit is not particularly limited, but is preferably 0.1 m²/g or more.

As the method of measuring the specific surface area (BET specific surface area) of the composite active material, a sample is vacuum dried at 300°C for 30 minutes, and then the specific surface area is measured according to the one-point method of nitrogen adsorption.

In a structure in which the particles of the battery active material capable of combining with lithium ions are sandwiched between folds consisting of graphite, other carbon materials such as amorphous carbon, hardly-graphitizable carbon, and easily-graphitizable carbon may be contained in a gap between the folds, along with the particles of the battery active material capable of combining with lithium ions. In addition, it is possible to coat the surface of the composite active material with carbon. By carrying out the treatment, it is possible to adjust the strength or the surface area of the composite active material and to enhance the electrochemical stability.

Next, the method for producing the composite active material for lithium secondary batteries according to the first aspect of the present invention will be described in detail.

The method for producing the composite active material for lithium secondary batteries according to the first aspect of the present invention includes: a mixing step of mixing an expanded graphite and the battery active material capable of combining with lithium ions with each other and thus obtaining a mixture; a compression step of compressing the mixture with an unidirectional press and thus obtaining a compressed mixture; and a spheroidization step of subjecting the compressed mixture to a spheroidization treatment and producing a composite active material for lithium secondary batteries constituted by flat particles having any of a rounded disk shape, a flattened ellipsoidal body shape, or a broad bean-type shape.

By the mixing step, the battery active material (preferably, a microparticulated battery active material) is highly uniformly dispersed into the gap between layers of the widened graphite of the expanded graphite (fold-widened graphite). By the compression step, the graphite folds are closed by the compression with the unidirectional press and adhere to the battery active material as being sandwiched between the graphite folds. By the spheroidization step, the composition of the battery active material and the graphite having a structure, in which the battery active material adheres to the graphite folds so as to be sandwiched between graphite folds, is constituted by flat particles having any of a rounded disk shape, a flattened ellipsoidal body shape, or a broad bean-type shape. At this time, since the battery active material outside of the composite active material is peeled off and falls in the spheroidization step, the graphite layer of the outermost layer generally wraps a multi-layer laminate of a battery active material layer and a graphite layer therein. Accordingly, the composite active material for lithium secondary batteries according to the first aspect of the present invention has very good contact frequency and adhesion between the graphite and the battery active material, as compared to the conventional composite active material for lithium secondary batteries. As a result, it becomes possible to impart high conductivity to the battery active material, and avoid the loss of the conductive path due to the pulverization of the battery active material with charge-discharge cycles, and it is consequently possible to improve cycle characteristics of the lithium secondary battery.

Conventionally, in a composite active material for lithium secondary batteries composed of graphite and a battery active material, expansion relief space has been intentionally provided in the composite active material to mitigate volume expansion and contraction of the battery active material. However, in the composite active material for lithium secondary batteries according to the first aspect of the present invention, the graphite and the battery active material are dispersed as highly as possible, compressed by the unidirectional press, and subjected to the spheroidization treatment based on the exactly opposite idea, thereby confining expansion of the battery active material in the solid AB planes of the graphite, maintaining conductivity and suppressing deformation of the composite active material. Particularly, since the composite active material for lithium secondary batteries according to the first aspect of the present invention is compressed by the unidirectional press at a high density, the density is high and it is possible to form a negative electrode of a high density with a process such as coating.

Furthermore, even when a battery active material is subjected to physical deformations such as finely pulverization with charge-discharge cycles, the battery active material is maintained in a state of being sandwiched between the graphite layers the distance between which can be flexibly adjusted, thus conductivity of the battery active material can be maintained.

Moreover, by using a molding material obtained by spheroidizing the composite active material for lithium secondary batteries according to the first aspect of the present invention, delamination of the pulverized battery active material from the fold of graphite can be suppressed. Alternatively, for the composite active material for lithium secondary batteries obtained by being subjected to spheroidization treatment has a structure in which a graphite edge is substantially not exposed to the outer surface due to spheroidization. Furthermore, as necessary, it is possible to have an edgeless structure in which the battery active material or graphite edge is not exposed to the surface of the composite active material for lithium secondary batteries due to the coating of CVD carbon on its surface. Further, when other carbon materials such as the amorphous carbon, the hardly-graphitizable carbon, the easily-graphitizable carbon are contained in the structure in which the particles of the battery active material capable of combining with lithium ions are sandwiched between the folds consisting of graphite, along with the particles of the battery active material capable of combining with lithium ions sandwiched between the folds consisting of graphite, carbon precursor materials such as petroleum pitch, coal pitch, pitch, polyacrylonitrile, phenol resin, furan resin are mixed with the battery active material in the mixing step to form a mixture of the expanded graphite, and the mixture may be carbonized by a heating treatment after being subjected to a compression step and a spheroidization step. The composite active material for lithium secondary batteries having the above structure exhibits more excellent safety.

By the composite active material for lithium secondary batteries according to the first aspect of the present invention, a large battery capacity can be generated from intrinsically nonconductive or low conductive battery active material, and furthermore, by utilizing the characteristics that the diffusion distance of lithium ions in the material due to a fine battery active material is short, it is possible to provide a composite active material for lithium secondary batteries that is capable of preparing a lithium secondary battery having extremely high charge-discharge rate characteristics and good cycle characteristics.

Hereinbelow, the used materials and procedures thereof will be described in detail by each step.

### <Mixing Step>

A mixing step is a step of mixing expanded graphite and a battery active material capable of combining with lithium ions, to obtain a mixture. This step is carried out, whereby the battery active material is uniformly mixed to the gaps between the folds of the widened graphite of the expanded graphite (fold-widened graphite), and a mixture in which the battery active material is extremely highly dispersed can be obtained. As described below, the battery active material dispersed and adhered on the graphite surface in the mixture is firmly adhered and wrapped up (in other words, contained) between the graphite and graphite in a manner being compressing the graphite with the unidirectional press.

First, the materials (graphite, battery active material, and the like.) used in this step will be described in detail, and then the procedures of this step will be described in detail.

### (Expanded Graphite)

The expanded graphite used in this step may be a commercially available product, or may be produced by a known method.

As the method for producing an expanded graphite, it can be produced by, for example, graphite (for example, flake graphite) is immersed in an acid at room temperature, thereafter, the obtained acid treated graphite is subjected to heating treatment (preferably, treated at 700 to 1000°C). More specifically, a flake natural graphite is immersed in a mixed acid of 9 parts by weight of sulfuric acid and 1 part by weight of nitric acid for about 1 hour, then the acid is removed, and the graphite is washed with water and dried. Thereafter, the obtained acid treated graphite is charged into a furnace at about 850°C, thereby the acid entered between graphite layers is ejected as a gas, the distance between the graphite layers partially widens, and an expanded graphite of a wide fold shape or an accordion shape is obtained. The expanded graphite can be also obtained by using graphite forming an intercalation compound of an alkali metal or the like with graphite, instead of the acid treated graphite.

The bulk density of the acid treated graphite obtained above is not particularly limited, but is preferably 0.6 g/cm³ or more and more preferably 0.7 g/cm³ or more, in that the acid treated graphite is sufficiently expanded. The upper limit is not particularly limited, but is 1.0 g/cm³ or less in many cases, due to manufacturing problems.

As the method of measuring the bulk density, a sample is inserted so as not to compress the sample in a 100 mL glass measuring cylinder, and the sample weight is divided by the sample volume to obtain a bulk density.

The expanded graphite used in this step preferably has a specific surface area of 30 m²/g or more. In the above range, the battery active material is more highly dispersed on the graphite surface of a high surface area (preferably with a thin thickness), as a result, a battery material using the composite active material for lithium secondary batteries according to the first aspect of the present invention shows larger charge-discharge capacity and better cycle characteristics. Among them, the specific surface area is preferably 40 m²/g or more and more preferably 60 m²/g or more, in that cycle characteristics of a lithium secondary battery using the composite active material are more excellent. The upper limit is not particularly limited, but a specific surface area of 200 m²/g or less is preferred in that the production procedure is complicated, and synthesis is difficult.

Here, the specific surface area of graphite is measured using BET method with nitrogen adsorption (JIS Z 8830, one-point method).

In the graphite, a layer in which a plurality of graphene sheets is stacked in the direction of stacking the graphite surface is contained, and the graphene sheets are mainly held together by van der Waals forces.

The average thickness of the layer of the laminated graphene sheets contained in the expanded graphite is preferably 40 nm or less and more preferably 22 nm or less, in that the charge-discharge capacity and cycle characteristic of the lithium secondary battery using the composite active material for lithium secondary batteries are more excellent. The lower limit is not particularly limited, but the average thickness is generally 4 nm or more since the production procedure is complicated.

It is said in general that the thickness of a single graphene sheet is as thin as 0.34 nm, and when the average thickness is thinner than 18 nm, the specific surface area is calculated as larger than about 50 m²/g. In addition, a graphene single sheet has a theoretical value of the specific surface area reaching 2630 m²/g.

As the method of measuring the average thickness, graphite is observed by electron microscope observation (TEM), and 10 or more of the thickness of the layers of the laminated graphene sheets in the graphite are measured, then the arithmetic mean of these values is calculated, thereby obtaining an average thickness.

The lower limit of the bulk density of the used expanded graphite is not particularly limited, but is preferably 0.02 g/cm³ or less and more preferably 0.01 g/cm³ or less, in that more uniform and higher dispersion of the battery active material to the graphite is made. The lower limit is 0.005 g/cm³ or more in many case, due to manufacturing problems.

As the method of measuring the bulk density, a sample is inserted so as not to compress the sample in a 500 mL glass measuring cylinder, and the sample weight is divided by the sample volume to obtain a bulk density.

### (Battery Active Material)

The battery active material used in this step is a battery active material compound (preferably, the negative electrode active material) capable of combining with lithium ions. In other words, the battery active material may be any material (for example, metals, carbides, nitrides or oxides of metals) that can combine with lithium ions and occlude and release lithium ions. For example, the battery active material is a metal or non-metal capable of absorbing and discharging lithium ions, or a metal oxide capable of alloying with lithium.

More specifically, examples include metals such as Si, Sn, Al, Sb, Zn, Bi, Cd, Pb, In, Ag, Ga, and Ge (metals capable of alloying with lithium) or alloys containing these metals (for example, Si alloys, Sb alloys, Sn alloys, and In alloys), metal oxides such as SnO and SnO₂ (metal oxides capable of alloying with lithium). Among them, the battery active material preferably contains at least one element selected from the group consisting of Si, Sn, Al, Sb, and In, and more preferably contains elements of Si and Sn, in that the discharge capacity and cycle characteristics of the lithium secondary battery obtained by using the obtained composite active material for lithium secondary batteries are more excellent.

The alloy may be an alloy containing a metal that does not occlude and release lithium ions, other than an alloy made of the metal combination described above. In this case, it is preferred if the content of the metal capable of alloying with lithium in the alloy is higher. Judging from uniformity and cycle characteristics of the particles determined by the secondary electron image obtained by SEM observation, the upper limit of the metal content is preferably 70% by mass and more preferably 60% by mass or less.

The shape of the used battery active material is not particularly limited, and any shapes such as powder, plate-like, granular, fibrous, bulk, and spherical can be used.

The average particle diameter of the used battery active material is 1 µm or less, preferably 0.5 µm or less, and more preferably 0.1 µm or less, in that falling off of the battery active material upon complexation of graphite with the battery active material and expansion failure of the battery active material with cycles and the like are further suppressed. The lower limit value is not particularly limited, and the smaller is preferable. In the usual pulverization method, it is possible to produce a fine powder to an average particle diameter of about 0.01 µm, and a powder having a particle diameter in this range can be effectively used.

As the method of measuring the average particle diameter, a laser diffraction-type particle size distribution analyzer is used. More specifically, D50: volume-based particle size distribution value of 50%, is defined as an average particle diameter.

In the method for obtaining a battery active material having the predetermined average particle diameter described above, it is possible to pulverize the battery active material using a known apparatus such as a stirred tank stirring mill (bead mill, and the like), thereby obtaining the powder with small particle diameter described above. As an example, by measuring the particle size distribution of the battery active material pulverized with a bead mill by a laser diffraction-type particle size distribution analyzer, it was shown that D50: volume-based particle size distribution value of 50%, i.e., an average particle diameter thereof was 0.096 µm. This result indicates that it is possible to obtain a battery active material having the predetermined average particle diameter by using a bead mill.

As described above, silicon particles are preferable as a preferred example of the battery active material, and silicon particles having an average particle diameter of 100 nm or less (particularly preferably, average particle diameter of 50 nm or less) are particularly preferable.

Methods for producing the fine silicon particles are not particularly limited, but the following two methods are preferred.

As a first method, there is a method that silicon monoxide is subjected to a heating treatment to form a composite containing silicon particles and silicon dioxide and the silicon particles are obtained by removal of the silicon dioxide from the composite. When the silicon monoxide is subjected to the heating treatment, the following reaction proceeds, and thus the composite (silicon containing composite) containing the silicon dioxide (SiO₂) and the silicon (Si) particles can be obtained.

2SiO → Si + SiO₂

In the silicon particles obtained in this way, depending on heating time, a particle diameter thereof can be adjusted and particles can be formed from several nm to about 20 nm. The silicon dioxide as a by-product can be removed by etching using a predetermined acid component such as hydrofluoric acid. Depending on etching time, the remaining amount of silicon dioxide can be regulted.

As a second method, there is a method for obtaining silicon particles by reducing silicon dioxide particles using a reducing agent. More specifically, a mixture obtained by mixing silicon dioxide particles and a reducing agent with each other is subjected to a heating treatment, and thus silicon particles can be obtained.

Hereinbelow, the description will be given with respect to a case where a magnesium metal is used as an example of thee reducing agent.

When the silicon dioxide particles are heated at a temperature equal to and higher than a melting point of magnesium together with the magnesium metal, the following reaction proceeds, and thus the silicon particles are formed.

SiO₂ + 2Mg → 2MgO + Si

Mg or the remaining SiO₂ can be removed using an acid component such as hydrochloric acid, if necessary. In addition, by making SiO₂, MgO or the like remaining, it is possible to suppress the contact of an electrolyte solution with the silicon particles to be formed.

The average particle diameter of the silicon dioxide particles to be used is particularly not limited, but the silicon dioxide particles having the average particle diameter of 50 nm or less is preferably used in the case of producing the silicon particles having the above average particle diameter of 50 nm or less. In addition, kinds of the silicon dioxide particles are not particularly limited, but, for example, silica such as colloidal silica or silica fume is used.

In the above, although the magnesium metal is used as the reducing agent, other materials, for example, a metal reducing agent (reducing agent consisting of a metal) may be preferred, and specifically, sodium metal, aluminum metal, lithium metal or the like can be mentioned.

When the silicon particles are used as the battery active material, before performing the mixing step, a particle forming step of forming silicon particles using the first or second method described above may be performed, if necessary. In particular, it is preferable to perform the step of forming the silicon particles using the first method. More specifically, the particle forming step is preferably performed in such a manner that the silicon monoxide is subjected to the heating treatment to form the composite containing the silicon particles and the silicon dioxide, resulting in obtaining the silicon particles by the removal of the silicon dioxide. When the step is performed, the fine silicon particles can be formed and battery characteristics are further improved as a result.

### (Procedures of Steps)

The method of mixing expanded graphite and a battery active material as described above is not particularly limited, and a known method can be used, and examples include so called dry treatment, wet treatment or the like. Here, embodiment of the wet treatment is preferred, in that the expanded graphite and the battery active material are more uniformly mixed in the obtained mixture.

As the dry treatment, for example, there is a method of adding the graphite and the battery active material described above to a known stirrer (for example, Henschel mixer), and mixing the mixture.

Examples of the wet treatment include a method of dispersing the graphite and the battery active material described above in a solvent and mixing and stirring the obtained solution, and removing the solvent.

The type of the solvent used in the wet treatment is not particularly limited, and may be a solvent capable of dispersing graphite and a battery active material. Examples include alcohol solvents (for example, methanol, ethanol, isopropanol), ketone solvents (such as acetone, methyl ethyl ketone, cyclohexanone), amide solvents (for example, formamide, dimethylacetamide, N-methylpyrrolidone, N-ethyl pyrrolidone), nitrile solvents (for example, acetonitrile, propionitrile), ester solvents (for example, methyl acetate, ethyl acetate), carbonate solvents (for example, dimethyl carbonate, diethyl carbonate), ether solvents (for example, cellosolve), halogenated solvents and mixtures of water and mixtures thereof, and the like.

Among them, alcohol solvents are preferable, in that cycle characteristics of a lithium secondary battery using the obtained composite active material for lithium secondary battery is more excellent.

In the wet treatment, conditions of mixing and stirring the expanded graphite and the battery active material is not particularly limited, and the optimum conditions are appropriately selected depending on the used materials. As the stirring time, about 1 to 2 hours are usually preferable, in that the expanded graphite and the battery active material are more uniformly dispersed, and consequently the cycle characteristics of a lithium secondary battery using the obtained composite active material for lithium secondary batteries are more excellent.

In addition, as necessary, ultrasonic wave may be added in stirring treatment.

The method of removing the solvent is not particularly limited, and includes methods using a known device (for example, an evaporator) and the like.

The battery active material is mixed in an amount of 10 to 230 parts by mass and is preferably mixed in an amount of 40 to 150 parts by mass, based on 100 parts by mass of the graphite, in that the cycle characteristics of a lithium secondary battery using the obtained composite active material for lithium secondary batteries are more excellent.

Also, the amount of the solvent used is not particularly limited, and the solvent is preferably mixed in an amount of 500 to 15000 parts by mass and is more preferably mixed in an amount of 2000 to 7000 parts by mass, based on 100 parts by mass of the graphite, in that the cycle characteristics of a lithium secondary battery using the obtained composite active material for lithium secondary batteries are more excellent, as a result of achieving higher dispersion.

### <Compression Step>

A compression step is a step of compressing the mixture, which is obtained by mixing the expanded graphite and the battery active material capable of combining with lithium ions with each other in the mixing step, using a unidirectional press. In this step, the mixture is compressed using unidirectional pressing apparatuses such as a monoaxial pressing apparatus, a roll pressing apparatus, a three-roll apparatus, and roller compactor. At this time, it is preferable to dry the mixture before the compression step. By drying the mixture, there are advantageous effects such as the density of the mixture after the pressing are further improved; the mixture can be prevented from being adhered to the pressing portion; and thus production efficiency increases.

Pressing pressure in the compression step is not particularly limited. In order to increase the density of the composite active material, however, the pressing pressure is preferably 1 to 30 MPa in the monoaxial pressing apparatus and is preferably 2 to 15 kgf/mm in the case of the roller-type pressing apparatus. The thickness after the pressing is preferably 2 to 30 µm. By the compression with the unidirectional press, opened folds of the expanded graphite are closed and the battery active material can adhere to the expanded graphite so as to be sandwiched between the graphite folds.

In addition, by controlling the pressing pressure, it is possible to control the density of the composite active material without depending on a spheroidization step which is the subsequent step. Moreover, by performing the compression step before the spheroidization step, it is possible to make the thickness and strength of the mixture suitable for the spheroidization step.

By compressing the mixture using the unidirectional press in the compression step, the structure in which the particles of the battery active material capable of combining with lithium ions are sandwiched in a gap between the folds consisting of graphite can obtain sheet-like structures which are stacked in nearly parallel with each other on a flat surface of the composite active material. That is, the compression mixture obtained by the compression step has the sheet-like structure.

### <Spheroidization Step>

A spheroidization step is a step of subjecting the compressed mixture obtained by the compression step to a spheroidization treatment, to produce a composite active material for lithium secondary batteries constituted by flat particles having generally any of a rounded disk shape, a flattened ellipsoidal body shape, or a broad bean-type shape.

By carrying out this step, the sheets produced by mixing the expanded graphite and battery active material capable of combining with lithium ions with each other and compressing the mixture are folded to be spheroidized. At that time, the edge portion of the graphite is folded inside to obtain the structure which is not substantially exposed to the surface of the formed composite active material for lithium secondary batteries.

Hereinafter, differences in mechanism in the spheroidization steps between the case of using the flake graphite and the case of using the expanded graphite will be described in detail.

For example, as described in JP 2008-27897A, when flake graphite and a battery active material are placed in a high speed air stream, the longitudinal direction of the graphite, that is, the AB plane of the graphite is arranged in the direction of the air flow and collides with a pin or a collision plate disposed perpendicularly to the air flow, and the AB plane of the graphite is compressed and deformed, and consequently spheroidizes in the form of sandwiching the battery active material. In this case, many of the battery active material present in the graphite surface separate from the graphite surface by impact at the collision, and only the battery active material accidentally being sandwiched between the AB planes of the graphite is interposed between the graphite layers.

Meanwhile, according to the first aspect of the present invention, the sheets produced by mixing the expanded graphite and battery active material capable of combining with lithium ions with each other and compressing the mixture has a dense structure in which the particles of the battery active material capable of combining with lithium ions are sandwiched in the gap between the folds consisting of graphite through the compression step before spheroidization, and the battery active material is in a state of being more uniformly sandwiched between the AB planes of the graphite. In addition, since the compressed mixture having the sheet-like structure which is obtained by mixing the expanded graphite and the battery active material capable of combining with lithium ions with each other and compressing the mixture in the compression step is softer than typical flake graphite, the deformation of the AB plane can easily occur by small compression force in the AB direction and spheroidization can proceed in a short time.

In the first aspect of the present invention, the compressed mixture having the sheet-like structure which is obtained by mixing the expanded graphite and the battery active material capable of combining with lithium ions with each other and compressing the mixture in the compression step is subjected to the spheroidization, and relatively flat particles are formed in which the sheet shape is maintained. The flat particles have any of a rounded disk shape, a flattened ellipsoidal body shape, or a broad bean-type shape.

In addition, the flat particles have one or more structures in which the particles of the battery active material capable of combining with lithium ions are sandwiched between the folds consisting of graphite, the structures are stacked from the top to the bottom in parallel generally with the flat surface, and the surrounding surface thereof is covered with the folds consisting of graphite or by deformation of the structure in which the particles of the battery active material capable of combining with lithium ions are sandwiched between the folds consisting of graphite.

The method of spheroidization treatment is not particularly limited, and is not particularly limited as long as it is a pulverizer that can mainly apply impact stress. Examples of the pulverizer include high-speed rotary impact pulverizers, and more specifically, a sample mill, a hammer mill, a pin mill, or the like can be used. Among them, a pin mill is preferred, in that the graphite and the battery active material are more uniformly mixed, and the cycle characteristics of a lithium secondary battery using the composite active material consequently obtained are more excellent.

The high-speed rotary impact pulverizer includes those in which a sample is allowed to crash into a rotor rotating at a high speed, to achieve refinement by the impact force, and examples include a hammer type of a hammer mill type fitted with a fixing or swinging impactor to the rotor, a rotary disk type of a pin mill type fitted with pins and an impact head to the rotating disk, an axial flow type in which a sample is pulverized while being transported to the shaft direction, an annular type that refines the particles in a narrow annular portion, and the like. More specifically, examples include hammer mills, pin mills, screen mills, turbo type mills, centrifugal type mills, and the like.

When this step is performed by the high-speed rotary impact pulverizer, it is preferred to be spheroidized at a rotational speed of usually 100 rpm or more, preferably 1500 rpm or more, and usually 20000 rpm or less. Pulverization proceeds by an excess impact force rather than spheroidization. Therefore, it is preferred that the impact rate is about 20 m/sec to 100 m/sec.

Since spheroidization treatment is treated at low impact force, unlike pulverization, it is usually preferred to perform circulation treatment in this step. The treatment time varies depending on the type and charge amount of the used pulverizer or the like, and is usually within 2 minutes, and the treatment time ends in about 10 seconds if it is a device in which a pin or a collision plate is appropriately arranged.

Further, the spheroidization treatment is preferably performed in air. When the same treatment with nitrogen gas flow is performed, there is a danger of firing when opened to atmosphere.

### (Other Producing Methods)

The method for producing the composite active material for lithium secondary batteries may include other producing methods without being limited to the above aspects.

For example, there may be a method for producing the composite active material for lithium secondary batteries including: a mixing step of mixing expanded graphite and silicon dioxide particles with each other to obtain a first mixture; a reduction step of mixing the first mixture and a reducing agent with each other to obtain a second mixture containing silicon particles obtained by reduction of silicon dioxide particles; a compression step of compressing the second mixture using a unidirectional press to obtain a compressed mixture; and a spheroidization step of performing a spheroidization treatment on the compressed mixture. Between the reduction step and the compression step, an extraction step of extracting residual oxides (for example, silicon dioxides, or magnesium oxides when a magnesium metal is used as a reducing agent) using an acid component (for example, hydrochloric acid or hydrofluoric acid) may be performed.

In the above producing method, first, once after silicon dioxide particles as a precursor of the battery active material are mixed with the expanded graphite, the silicon dioxide particles are subjected to a reduction treatment to produce silicon particles, and then the compression step and the spheroidization step described above are carried out. A manner for obtaining the silicon particles from the silicon dioxide particles conforms to the second method for forming the silicon particles described above.

Furthermore, as another method for producing a composite active material for lithium secondary batteries, there may be a producing method that includes a mixing step of obtaining a first mixture by mixing expanded graphite with silicon monoxide, a forming step of subjecting the mixture to a heating treatment to obtain a second mixture containing a composite containing silicon particles and silicon dioxide, a compression step of compressing the second mixture with an unidirectional press to obtain a compressed mixture, and a spheroidization step of subjecting the compressed mixture to a spheroidization treatment. An extracting step may be carried out between the forming step and the compression step to extract residual oxides (for example, silicon dioxide) using an acid component (for example, hydrofluoric acid).

In the above producing method, first, once after silicon monoxide as a precursor of the battery active material is mixed with the expanded graphite, the silicon monoxide is subjected to a heating treatment to form the silicon particles, and then the compression step and spheroidization step described above are carried out. A manner for obtaining the silicon particles from the silicon monoxide conforms to the first method for forming the silicon particles described above.

### <Lithium Secondary Battery>

The composite active material described above is useful as an active material used for a battery material (electrode material) used in the lithium secondary battery.

The characteristics of the battery material using the composite active material include that the capacity close to the theoretical value of the battery material is obtained, the cycle characteristics are favorable, and the rate characteristics are excellent. The reasons for obtaining a capacity close to the theoretical value of the battery material include that the graphite having excellent conductivity can sufficiently exist around the refined battery active material. In addition, the reasons why cycle characteristics are good include that the battery active material is surrounded in close contact with a thin graphite layer and thus never lose a conductive path even if the battery active material is pulverized with cycles. Furthermore, the reasons why the rate characteristics are excellent include that, as a result of the battery active material being refined, the diffusion distance of Li ions is small. In particular, it is theoretically obvious that the smaller the particle diameter, the better the rate characteristics, and the excellent rate characteristics are first achieved by sufficiently securing a conductive path under an environment where it is securely retained in the thin graphite layer without falling the battery active material further refined with cycles.

The method for producing a negative electrode for a lithium secondary battery using a composite active material is not particularly limited, and a known method can be used.

For example, a composite active material and a binder can be mixed and formed into a paste using pressure molding or a solvent, and applied on a copper foil to obtain a negative electrode for a lithium secondary battery. More specifically, 92 g of a composite active material, 62 g of a 13% PVDF/NMP solution, 0.5 g of conductive carbon black, and 29 g of NMP are mixed, and good slurry can be obtained using a double arm mixer usually used.

As a current collector other than a copper foil, it is preferred to have a three-dimensional structure, in that the cycle of the battery is more excellent. Examples of the material of a current collector having a three-dimensional structure include carbon fibers, sponge-like carbon (sponge-like resin coated with carbon), metals, and the like.

The current collector having a three-dimensional structure (porous current collectors) includes plain weave wire mesh, expanded metal, lath net, metal foam, metal woven fabric, metal nonwoven fabric, carbon fiber woven fabric, and carbon fiber nonwoven fabric, as the porous body of the conductor of metal and carbon.

As the used binder, a known material can be used, for example, a fluorine resin such as polyvinylidene fluoride or polytetrafluoroethylene, SBR, polyethylene, polyvinyl alcohol, carboxymethyl cellulose, glue or the like is used.

In addition, examples of the solvent include water, isopropyl alcohol, N-methylpyrrolidone, dimethylformamide and the like.

At the time of forming a paste, as necessary, stirring and mixing may be carried out using a known stirrer, mixer, kneading machine, kneader or the like, as described above.

When preparing a coating slurry using a composite active material, it is preferred to add conductive carbon black, carbon nanotube or a mixture thereof as the conductive material. The shape of the composite active material obtained by the above step is often relatively granulated (particularly, generally spheroidized), and the contact between particles tends to be a point contact. To avoid this adverse effects, examples include a method of blending carbon black, carbon nanotube or a mixture thereof with the slurry. The carbon black, carbon nanotube or the mixture thereof can intensively agglomerate to a capillary portion formed by contact of the composite active material during drying of the slurry solvent, thus loss of contact (increased resistance) with cycles can be prevented.

The blending amount of the carbon black, carbon nanotube or the mixture thereof is not particularly limited, but is preferably 0.2 to 4 parts by mass and more preferably 0.5 to 2 parts by mass, based on 100 parts by mass of the composite active material. Examples of the carbon nanotube are single-walled carbon nanotubes and multi-walled carbon nanotubes.

### (Positive Electrode)

As the positive electrode used in a lithium secondary battery having a negative electrode obtained by using the composite active material, a positive electrode using a known positive electrode material can be used.

The method for producing a positive electrode includes known methods, and includes a method of applying a positive electrode material and a positive electrode mixture including a bonding agent and a conductive agent to the surface of the current collector. The positive electrode material (positive electrode active material) includes metal oxides such as chromium oxide, titanium oxide, cobalt oxide and vanadium pentoxide, lithium metal oxides such as LiCoO₂, LiNiO₂, LiNi_{1-y}Co_{y}O₂, LiNi_{1-x-y}CoₓAl_{y}O₂, LiMnO₂, LiMn₂O₄ and LiFeO₂, chalcogen compounds of a transition metal such as titanium sulfide or molybdenum sulfide, conjugated polymer materials having conductivity such as polyacetylene, polyparaphenylene and polypyrrole, and the like.

### (Electrolyte)

As an electrolyte used in a lithium secondary battery having a negative electrode obtained by using the composite active material, a known electrolyte can be used.

For example, as an electrolyte salt contained in the electrolyte, lithium salts such as LiPF₆, LiBF₄, LiAsF₆, LiClO₄, LiB (C₆H₅), LiCl, LiBr, LiCF₃SO₃, LiCH₃SO₃, LiN (CF₃SO₂)₂, LiC (CF₃SO₂)₃, LiN (CF₃CH₂OSO₂)₂, LiN (CF₃CF₃OSO₂)₂, LiN (HCF₂CF₂CH₂OSO₂)₂, LiN{(CF₃)₂CHOSO₂}₂, LiB{(C₆H₃(CF₃)₂}₄, LiN (SO₂CF₃)₂, LiC (SO₂CF₃)₃, LiAlCl₄ or LiSiF₆ can be used. LiPF₆ and LiBF₄ are particularly preferable from the viewpoint of oxidation stability.

The electrolyte salt concentration in the electrolyte solution is preferably 0.1 to 5 mol/L, and more preferably 0.5 to 3 mol/L.

As the solvent used in the electrolyte, for example, a carbonate such as ethylene carbonate, propylene carbonate, dimethyl carbonate or diethyl carbonate, an ether such as 1,1- or 1,2-dimethoxyethane, 1,2-diethoxyethane, tetrahydrofuran, 2-methyltetrahydrofuran, γ-butyrolactone, 1,3-dioxofuran, 4-methyl-1,3-dioxolane, anisole or diethyl ether, a thioether such as sulfolane or methyl sulfolane, a nitrile such as acetonitrile, chloronitriles or propionitrile, an aprotic organic solvent such as trimethyl borate, tetramethyl silicate, nitromethane, dimethylformamide, N-methylpyrrolidone, ethyl acetate, trimethyl orthoformate, nitrobenzene, benzoyl chloride, benzoyl bromide, tetrahydrothiophene, dimethyl sulfoxide, 3-methyl-2-oxazoline, ethylene glycol or dimethyl sulfite can be used.

Instead of the electrolyte, a polyelectrolyte such as a polymer solid electrolyte and a polymer gel electrolyte may be used. As the polymer compound constituting the matrix of the polymer solid electrolyte or polymer gel electrolyte, an ether polymer compound such as polyethylene oxide or a cross-linked product thereof, a methacrylate polymer compound such as poly methacrylate, an acrylate polymer compound such as polyacrylate, and a fluorine polymer compound such as polyvinylidene fluoride (PVDF) and a vinylidene fluoride-hexafluoropropylene copolymer are preferred. It can also be used as a mixture thereof. From the viewpoint of oxidation-reduction stability, a fluorine polymer compound such as PVDF or a vinylidene fluoride-hexafluoropropylene copolymer are particularly preferred.

### (Separator)

As the separator used in the lithium secondary battery having a negative electrode obtained by using the composite active material, a known material can be used. For example, woven fabric, nonwoven fabric, synthetic resin microporous membrane and the like are exemplified. Synthetic resin microporous membrane is preferred, and among them, polyolefin microporous membrane is suitable from the viewpoint of membrane thickness, membrane strength, membrane resistance, and the like. Specifically, polyethylene and polypropylene microporous membranes, microporous membranes that combine these membranes, and the like are preferred.

A lithium secondary battery can have a form such as cylindrical, rectangular or button, according to a conventional method, by using the negative electrode, positive electrode, separator, electrolyte and other battery components described above (for example, current collector, gasket, sealing plate, case, and the like).

The lithium secondary battery of the first aspect of the present invention is used in various mobile electronic devices, and can be used particularly in laptop computers, laptop word processors, palmtop (pocket) personal computers, mobile phones, portable fax machines, portable printers, headphone stereos, video cameras, portable television, portable CD, portable MD, electric beard, electronic notebooks, transceivers, electric power tools, radios, tape recorders, digital cameras, portable copiers, portable game machines, and the like. In addition, further, the lithium secondary battery can be used as a secondary battery of electric vehicles, hybrid vehicles, vending machines, electric carts, storage systems for load leveling, condensers for home use, distributed power storage systems (built in stationary electric appliances), emergency power supply systems, and the like.

It is preferred that the lithium secondary battery using a negative electrode containing the composite active material of the first aspect of the present invention is used in a state that the battery active material capable of combining with lithium ions is charged 60% or more and the graphite is charged 50% or less, in a fully charged state. In particular, when silicon is used as the battery active material, the average charge-discharge potential of silicon is in the vicinity of 0.4 V with respect to a lithium reference electrode, and is nobler than that of graphite by 0.2 V or so. Therefore, when charging the lithium secondary battery using a negative electrode containing the composite active material, first, the silicon is charged, then the charging of the graphite begins. In the graphite negative electrode of a lithium secondary battery, LiC₆ is generated by charging, but this material is a material chemically and thermally unstable. In the above embodiment, even immediately after charging, exposure of LiC₆ to the surface of the composite active material is small since the charging amount of the graphite covering most of the surface is small. Therefore, it is possible to suppress heat generation by immediately reacting with the electrolyte even if SEI film is decomposed.

In addition, in the lithium secondary battery using a negative electrode including the composite active material of the first aspect of the present invention, it is preferred to be used in a range where the potential of the negative electrode is not less than 0.4 V with respect to a lithium reference electrode. When used in this range, exposure of LiC₆ to the surface of the composite active material is small for the same reason as described above, and therefore, it is possible to suppress heat generation by immediately reacting with the electrolyte even if SEI film is decomposed.

### <<Second Aspect>>

Hereinbelow, a composite active material for lithium secondary batteries and a method for producing the same according to the second aspect of the present invention will be described in detail. First, features of the second aspect of the present invention compared to the related art will be described in detail.

As one of the features of the production method of the second aspect of the present invention, along with graphite indicating a predetermined specific surface area, a carbon precursor and at least one kind (hereinafter, also referred collectively to as an "additive") selected from the group consisting of a metal oxide, a metal oxide precursor, an inorganic solid electrolyte, and an inorganic solid electrolyte precursor are used at the time of producing the composite active material for lithium secondary batteries.

By examining the reason why an irreversibly abnormal volume expansion occurs after repetition of charge-discharge cycles using the composite active material for lithium secondary batteries disclosed in Patent Literature 1, the present inventors have found that a battery active material capable of combining with lithium ions (for example, silicon) is gradually oxidized and turns into a form of sponge. More specifically, the inventors assume, for example, in the case of the silicon which is the battery active material capable of combining with lithium ions, that expansion and contraction of the volume occur when lithium ions are stored and released in/from the silicon, stress is applied to the silicon at this time to cause cracks, an electrolyte solution penetrates from the cracks, and thus an oxidation process of the silicon is repeated.

Therefore, the inventors have found that the above problem can be solved by using the carbon precursor and the additive. More specifically, first, when the carbon precursor is used, the adhesion property between the graphite component and the battery active material capable of combining with lithium ions is improved and the penetration of the electrolyte solution is suppressed. Furthermore, when the composite active material for lithium secondary batteries is produced by using the additive, it is considered that at least a portion of the surface of the battery active material capable of combining with lithium ions is covered with metal oxide and/or a solid electrolyte. As a result, oxidation of the battery active material capable of combining with lithium ions hardly occur due to the electrolyte solution as described above, and this fact is consequently considered to contribute to the suppression of the volume expansion of the electrode material.

Hereinafter, first, a method for producing the composite active material for lithium secondary batteries (hereinafter, simply also referred to as a composite active material) according to the second aspect of the present invention will be described in detail, and then an aspect of the composite active material for lithium secondary batteries to be produced will be described in detail.

Examples of the method for producing the composite active material for lithium secondary batteries according to the second aspect of the present invention may include Aspect A of mixing the above-described additive before a spheroidization treatment and Aspect B of mixing the additive after the spheroidization treatment. Hereinafter, first, Aspect A will be described in detail and then Aspect B will be described in detail.

### <<Aspect A>>

Aspect A of the method for producing the composite active material for lithium secondary batteries according to the second aspect of the present invention includes a mixing step of mixing predetermined components, a spheroidization step of subjecting the obtained product (mixture) to a spheroidization treatment, and a heating step of subjecting the obtained product (spherical mixture) to a heating treatment.

Hereinbelow, the used materials and procedures thereof will be described in detail by each step.

### <Mixing Step>

A mixing step is a step of mixing graphite having a specific surface area of 10 m²/g or more, a battery active material capable of combining with lithium ions (hereinafter, also simply referred to as a battery active material), a carbon precursor, and at least one kind (additive) selected from the group consisting of a metal oxide, a metal oxide precursor, an inorganic solid electrolyte, and an inorganic solid electrolyte precursor with one another, to obtain a mixture. This step is carried out, whereby the battery active material is uniformly mixed to the extremely large graphite surface and the battery active material is extremely highly dispersed. At this time, the carbon precursor serves to aid in adhesion property between the graphite and the battery active material. In addition, it is considered that various additives mainly adhere to the surface of the battery active material as described above and then are subjected to treatments to be described below, thereby becoming a metal oxide or an inorganic solid electrolyte battery active material and being disposed so as to cover the surface. As described below, since graphite has a large area, the battery active material, the carbon precursor, and the additive dispersed and adhered on the graphite surface in the mixture is wrapped up (in other words, contained) between the graphite in a manner being sandwiched by the graphite only by applying small pressure to the graphite.

First, the materials (graphite, battery active material, carbon precursor, additive, and the like.) used in this step will be described in detail, and then the procedures of this step will be described in detail.

### (Graphite)

The graphite used in this step shows a specific surface area of 10 m²/g or more. In the above range, a composite active material for lithium secondary batteries in which the battery active material, the hard carbon, soft carbon or amorphous carbon, the metal oxide, or the inorganic solid electrolyte is highly dispersed on the graphite surface of a high surface area (preferably with a thin thickness) is obtained. As a result, the battery material using the composite active material for lithium secondary batteries according to the second aspect of the present invention shows excellent battery characteristics (for example, high-speed charge and discharge characteristics, large charge and discharge capacity, and good cycle characteristics).

Among them, the specific surface area is preferably 20 m²/g or more, and more preferably 30 m²/g or more, in that cycle characteristics of a lithium secondary battery using the composite active material are more excellent. The upper limit is not particularly limited, but a specific surface area of 200 m²/g or less is preferred in that the production procedure is complicated, and synthesis is difficult.

In a specific surface area of the graphite of less than 10 m²/g, mixing of the graphite, the battery active material, and the metal oxide or the inorganic solid electrolyte is nonuniform, and falling off of the battery active material and exposure of the battery active material to the surface of a molded composite active material occur when molding, consequently, a volume expansion of the battery material including the composite active material becomes larger and the lithium secondary battery using the composite active material deteriorates in cycle characteristics.

Here, the specific surface area of graphite is measured using BET method with nitrogen adsorption (JIS Z 8830, one-point method).

In the graphite, for example, a layer in which a plurality of graphene sheets is stacked in the direction of stacking the graphite surface is contained, and the graphene sheets are mainly held together by van der Waals forces.

As the graphite of the specific surface area, so-called graphene (graphene sheet) itself can be used.

The upper limit of the bulk density of the used graphite is not particularly limited, but is preferably 0.02 g/cm³ or less and more preferably 0.01 g/cm³ or less, in that more uniform and higher dispersion of the battery active material and the metal oxide or the inorganic solid electrolyte to a graphite component in the composite active material is made. The lower limit is 0.005 g/cm³ or more in many cases, due to manufacturing problems.

As the method of measuring the bulk density, a sample is inserted so as not to compress the sample in a 500 mL glass measuring cylinder, and the sample weight is divided by the sample volume to obtain a bulk density.

The graphite used in this step may be a commercially available product, or may be produced by a known method.

As the graphite, a so-called expanded graphite or flaky graphite can be used.

As the method for producing an expanded graphite, it can be produced by, for example, graphite (for example, flake graphite) is immersed in an acid at room temperature, thereafter, the obtained acid treated graphite is subjected to heat treatment (preferably, treated at 700 to 1000°C). More specifically, a flake natural graphite is immersed in a mixed acid of 9 parts by mass of sulfuric acid and 1 part by mass of nitric acid for about 1 hour, then the acid is removed, and the graphite is washed with water and dried. Thereafter, the obtained acid treated graphite is charged into a furnace at about 850°C, thereby obtaining an expanded graphite. An expanded graphite can be also obtained by using graphite forming an intercalation compound of an alkali metal or the like with graphite, instead of the acid treated graphite.

The bulk density of the acid treated graphite obtained above is not particularly limited, but is preferably 0.6 g/cm³ or more and more preferably 0.7 g/cm³ or more, in that the acid treated graphite is sufficiently expanded. The upper limit is not particularly limited, but is 1.0 g/cm³ or less in many cases, due to manufacturing problems.

As the method of measuring the bulk density, a sample is inserted so as not to compress the sample in a 100 mL glass measuring cylinder, and the sample weight is divided by the sample volume to obtain a bulk density.

In addition, as the method for producing a flaky graphite, the expanded graphite is dispersed in a solvent, then treated with a pulverizer that applies ultrasonic treatment or a high shear stress (for example, stone mill) or the like, whereby the hinge portion of the expanded graphite is damaged, and a flaky graphite in which about fifty graphene sheets (preferably, 10 to 150 sheets) are laminated can be obtained.

The number of the graphene sheets that constitute the expanded graphite showing the specific surface area, and the number of the graphene sheets that constitute the flaky graphite obtained by pulverizing them, are estimated to be basically almost the same.

### (Battery Active Material capable of combining with lithium ions)

The battery active material used in this step is a battery active material compound (preferably, the negative electrode active material) capable of combining with lithium ions. In other words, the battery active material may be any material (for example, metals, carbides or nitrides of metals) that can combine with lithium ions and occlude and release lithium ions.

More specifically, examples include metals such as Si, Sn, Al, Sb, Zn, Bi, Cd, Pb, In, Ag, Ga, and Ge (metals capable of alloying with lithium) or alloys containing these metals (for example, Si alloys, Sb alloys, Sn alloys, and In alloys). Among them, the battery active material preferably contains at least one element selected from the group consisting of elements of Group 13 on a periodic table, elements of Group 14 on the periodic table, elements of Group 15 on the periodic table, magnesium, and manganese (preferably, metals of these elements or alloys containing these metals), and more preferably contains at least one element selected from the group consisting of Si, Sn, Al, Sb, and In (preferably, metals of these elements or alloys containing these metals), and most preferably contains elements of Si or Sn (preferably, metals of these elements or alloys containing these metals), in that the discharge capacity and cycle characteristics of the lithium secondary battery obtained by using the obtained composite active material for lithium secondary batteries are more excellent. It is particularly preferred that the battery active material is silicon.

The alloy may be an alloy containing a metal that does not occlude and release lithium ions, other than an alloy made of the metal combination described above. In this case, it is preferred if the content of the metal capable of alloying with lithium in the alloy is higher. Judging from uniformity and cycle characteristics of the particles determined by the secondary electron image obtained by SEM observation, the upper limit of the metal content is preferably 70% by mass and more preferably 60% by mass or less.

The shape of the used battery active material is not particularly limited, and any shapes such as powder, plate-like, granular, fibrous, bulk, and spherical can be used.

The average particle diameter of the used battery active material is preferably 1 µm or less, more preferably 0.5 µm or less, and further preferably 0.1 µm or less, in that falling off of the battery active material upon complexation of graphite with the battery active material and expansion failure of the battery active material with cycles and the like are further suppressed. The lower limit value is not particularly limited, and the smaller is preferable. In the usual pulverization method, it is possible to produce a fine powder to an average particle diameter of about 0.01 µm, and a powder having a particle diameter in this range can be effectively used.

As the method of measuring the average particle diameter, a laser diffraction-type particle size distribution analyzer is used. More specifically, D50: 50% volume particle diameter is defined as an average particle diameter.

As the method for obtaining a battery active material having the predetermined average particle diameter described above, it is possible to pulverize the battery active material using a known apparatus such as a stirred tank stirring mill (bead mill, and the like), thereby obtaining the powder with small particle diameter described above.

Particularly, as the battery active material, silicon particles are preferred, and silicon particles having an average particle diameter of 100 nm or less (particularly preferably, average particle diameter 50 nm or less) are particularly preferred. As these silicon particles, the silicon particles as described above in the first aspect can be used which are obtained by subjecting the silicon monoxide to the heating treatment to form the composite containing the silicon particles and the silicon dioxide and removing the silicon oxide from the composite. In addition, the silicon particles can be used which are obtained by reducing the silicon dioxide particles using the above-described reducing agent (for example, magnesium metal).

### (Carbon Precursor)

A carbon precursor used in this step serves as an adhesive to enhance adhesion properties between the graphite and the battery active material in the mixture. The carbon precursor is converted into a hard carbon, soft carbon or amorphous carbon when being subjected to a heating treatment in a heating step to be described below.

Examples of the carbon precursor may be a polymer compound (organic polymers), coal-based pitch, petroleum-based pitch, mesophase pitch, coke, low-molecular heavy oil, or derivatives thereof without being particularly limited as long as being a material which is converted into a carbide by the heating treatment (calcinig and carbonizing) as described above. Among them, the polymer compound is preferred in that the expansion of the battery material using the composite active material for lithium secondary batteries is further suppressed and the cycle characteristics of the lithium secondary battery are more excellent (hereinafter, these advantages are simply also referred to as "the advantageous effects of the second aspect of the present invention are more excellent".

Examples of the polymer compound may include phenol resin, furan resin, epoxy resin, polyvinyl chloride, polyvinyl alcohol, polyacrylamide, polyethylenimine, cellulose, rayon, polyacrylonitrile, or polystyrene.

Only one kind may be used and a combination of two or more kinds may be used as the carbon precursor.

The shape of the used carbon precursor is not particularly limited, and any shapes such as powder, plate-like, granular, fibrous, bulk, and spherical can be used. These carbon precursors are preferably dissolved in a solvent to be used for mixing various components.

An average molecular weight of the used carbon precursor is preferably 1000 or more and more preferably 1,000,000 or less in that the advantageous effects of the second aspect of the present invention are more excellent.

### (At least one kind (additive) selected from the group consisting of metal oxide, metal oxide precursor, inorganic solid electrolyte, and inorganic solid electrolyte precursor)

In this step, at least one kind selected from the group consisting of a metal oxide, a metal oxide precursor (precursor of metal oxide), an inorganic solid electrolyte, and an inorganic solid electrolyte precursor (precursor of inorganic solid electrolyte) is used. As described above, it is considered that these additives mainly adhere to the surface of the battery active material and are contained in the composite active material through treatments to be described below so as to cover the battery active material. Only one kind or plural kinds of the metal oxide, the metal oxide precursor, the inorganic solid electrolyte, and the inorganic solid electrolyte precursor can be used.

Among the above additives, the metal oxide or the metal oxide precursor is preferred in that the volume expansion of the battery material including the composite active material is further suppressed.

Kinds of metal elements contained in the metal oxide or the precursor thereof (metal oxide precursor) are not particularly limited, but at least one kind selected from the group consisting of elements of Group 2 on the periodic table, elements of Group 12 on the periodic table, elements of Group 13 on the periodic table, and elements of Group 14 on the periodic table (excluding a carbon atom) is preferred, at least one kind selected from the group consisting of aluminum, magnesium, titanium, tin, zirconia, indium, and silicon is more preferred, and at least one kind selected from the group consisting of aluminum, magnesium, titanium, tin, zirconia, and indium is further preferred.

The metal oxide precursor may include a compound containing the above metal elements without being particularly limited as long as being a compound which turns into the metal oxide by a heating step to be described below. Examples of the metal oxide precursor may include salts containing the above metal elements (for example, hydroxides, acetic acid compounds, sulfate compounds, acetic acid compounds, chlorides, fluorides, iodides, bromides, oxalic acid compounds, phosphate compounds or the like) or alkoxide compounds or halides containing the above metal elements.

More specifically, examples of the salts containing the above metal elements may include aluminum nitrate, magnesium nitrate, tetraisopropoxytitanium, or titanium tetrachloride.

Examples of the above alkoxide compounds may include compounds represented by the following Formula (1).

Formula (1): M(OR)ₙ

In Formula (1), M represents metal elements described above, R represents an alkyl group, and n represents a valence of M. For example, n represents 3 when M is a trivalent metal element (for example, Al), and n represents 4 when M is a tetravalent metal element (for example, Si).

Examples of the halides may include compounds represented by the following Formula (2).

Formula (2) : M(X)ₙ

In Formula (2), M represents metal elements described above, X represents a halogen atom (for example, chlorine atom), and n represents a valence of M.

Kinds of the inorganic solid electrolyte are not particularly limited, but, for example, may include an oxide containing lithium, a compound containing lithium and halogen, or a compound containing lithium and nitrogen.

Examples of the oxide containing lithium may include a phosphorate-based material such as Li₁₊ₓAₓB_{2-y}(PO₄)₃ (x is Al, Ge, Sn, Hf, Zr, Sc, or Y; B is Ti, Ge, or Zn; and 0 < x < 0.5), LiMPO₄ (M is Mn, Fe, Co, or Ni), and Li₃PO₄; and a lithium composite oxide such as Li₃XO₄ (X is As or V), Li₃₊ₓAₓB₁₋ₓO₄ (A is Si, Ge, or Ti; B is P, As, or V; and 0 < x < 0.6), Li₄₊ₓAₓSi₁₋ₓO₄ (A is B, Al, Ga, Cr, or Fe; and 0 < x < 0.4) (A is Ni or Co; 0 < x < 0.1) Li_{4-3y}Al_{y}SiO₄ (0 < y < 0.06), Li_{4-2y}Zn_{y}GeO₄ (0 < y < 0.25), LiAlO₂, Li₂BO₄, Li₄XO₄ (X is Si, Ge, or Ti), and lithium titanate (LiTiO₂, LiTi₂O₄, Li₄TiO₄, Li₂TiO₃, Li₂Ti₃O₇, or Li₄Ti₅O₁₂). Examples of the compound containing lithium and halogen may include LiBr, LiF, LiCl, LiPF₆, and LiBF₄. Examples of the compound containing lithium and nitrogen may include LiPON, LiN(SO₂CF₃)₂, LiN(SO₂C₂F₅)₂, Li₃N, and LiN (SO₂C₃F₇)₂.

In addition to the above kinds, as the inorganic solid electrolyte, materials such as LISICONs; crystals having a perovskite structure with lithium ion conductivity such as La_{0.55}Li_{0.35}TiO₃; Li-Ti₂P₃O₁₂ or LiPON having a NASICON type structure; or lithiumphosphorous sulfide based glass can be also used.

Among them, glass ceramics containing a lithium element is preferred as the inorganic solid electrolyte in that cycle characteristics of a lithium secondary battery using the composite active material is more excellent.

The precursor of the inorganic solid electrolyte (inorganic solid electrolyte precursor) is intended for a compound which turns into the inorganic solid electrolyte by a heating treatment to be described below, and kinds thereof are not particularly limited. As the inorganic solid electrolyte precursor, only one kind of compound may be used and two or more compounds may be used. As the inorganic solid electrolyte precursor, an inorganic solid electrolyte precursor capable of forming glass ceramics containing a lithium element is preferred.

For example, when Li₃PO₄ is used as the inorganic solid electrolyte, lithium nitrate (LiNO₃) and phosphoric acid (H₃PO₄) can be used as the precursor of the inorganic solid electrolyte. In addition, when lithium titanate (lithium-titanium oxide, lithium titanate) is used as the inorganic solid electrolyte, tetraisopropoxytitanium and lithium acetate can be used as the precursor of the inorganic solid electrolyte. Furthermore, when lithium silicate is used as the inorganic solid electrolyte, tetraethoxysilane and lithium acetate can be used as the precursor of the inorganic solid electrolyte. As described above, a compound containing a metal alkoxide and a lithium element (for example, lithium salt) can be used as the inorganic solid electrolyte.

### (Procedures of Steps)

The method of mixing the graphite, the battery active material, the carbon precursor, and the additive as described above is not particularly limited, and a known method can be used, and examples include so called dry treatment, wet treatment or the like. Here, a mode of the wet treatment is preferred, in that the graphite, the battery active material, the carbon precursor, and the additive are more uniformly mixed in the obtained mixture.

Examples of the dry treatment include a method of adding the graphite, the battery active material, the carbon precursor, and the additive described above to a known stirrer (for example, Henschel mixer), and mixing the mixture.

Examples of the wet treatment include a method of dispersing the graphite, the battery active material, the carbon precursor, and the additive in a solvent and mixing and stirring the obtained solution, and removing the solvent.

The type of the solvent used in the wet treatment is not particularly limited, and may be a solvent capable of dispersing graphite, the battery active material, the carbon precursor, and additives. Examples include alcohol solvents (for example, methanol, ethanol, isopropanol), ketone solvents (such as acetone, methyl ethyl ketone, cyclohexanone), amide solvents (for example, formamide, dimethylacetamide, N-methylpyrrolidone, N-ethyl pyrrolidone), nitrile solvents (for example, acetonitrile, propionitrile), ester solvents (for example, methyl acetate, ethyl acetate), carbonate solvents (for example, dimethyl carbonate, diethyl carbonate), ether solvents (for example, cellosolve), halogenated solvents and mixtures of water and mixtures thereof, and the like.

Among them, alcohol solvents are preferable, in that cycle characteristics of a lithium secondary battery using the obtained composite active material for lithium secondary battery is more excellent.

In the wet treatment, conditions of mixing and stirring the graphite, the battery active material, the carbon precursor, and the additive is not particularly limited, and the optimum conditions are appropriately selected depending on the used materials. As the stirring time, about 1 to 2 hours are usually preferable, in that each component is more uniformly dispersed, and consequently the cycle characteristics of a lithium secondary battery using the obtained composite active material for lithium secondary batteries are more excellent.

In addition, as necessary, ultrasonic wave may be added in stirring treatment. In that case, the stirring time may be 10 minutes or the like.

The method of removing the solvent is not particularly limited, and includes methods using a known device (for example, an evaporator) and the like.

The battery active material is mixed in an amount of 10 to 230 parts by mass and is preferably mixed in an amount of 20 to 200 parts by mass, based on 100 parts by mass of the graphite, in that the advantageous effects of the second aspect of the present invention are more excellent.

The mixing ratio of the graphite and the carbon precursor is not particularly limited, and the carbon precursor is preferably mixed in an amount of 1 to 50 parts by mass, is more preferably mixed in an amount of 5 to 40 parts by mass, and is further preferably mixed in an amount of 5 to 20 parts by mass, based on 100 parts by mass of the graphite, in that the advantageous effects of the second aspect of the present invention are more excellent.

The total amount of the additive is mixed in an amount of 0.0001 to 50 parts by mass and is preferably mixed in an amount of 0.001 to 5 parts by mass, based on 100 parts by mass of the graphite, in that the advantageous effects of the second aspect of the present invention are more excellent.

Furthermore, in the case of using the solvent, the amount of the solvent used is not particularly limited, and the solvent is preferably mixed in an amount of 3000 to 15000 parts by mass, is more preferably mixed in an amount of 4000 to 12000 parts by mass, and is further preferably mixed in an amount of 5000 to 7000 parts by mass, based on 100 parts by mass of the graphite, in that the advantageous effects of the second aspect of the present invention are more excellent as a result of making higher dispersion.

The mixing step above further includes a pressing step, in which pressing the mixture obtained in the mixing step, before a spheroidization step to be described below. When the pressing step is carried out, the distance between the graphite and the graphite becomes narrower and the spheroidization treatment to be described below more efficiently proceeds.

Pressing methods are not particularly limited, but a known method may be employed.

### <Spheroidization Step>

A spheroidization step is a step of subjecting the product (the mixture containing the graphite, the battery active material, the carbon precursor, and the additive) obtained in the mixing step to a spheroidization treatment, to produce a spherical mixture.

By carrying out this step, sheets of the graphite are folded so as to incorporate the battery active material, the carbon precursor, and the additive therein, to be spheroidized. At that time, the edge portion of the graphite is folded inside to obtain the structure in which the battery active material is not substantially exposed to the surface of the formed composite active material for lithium secondary batteries.

The method of spheroidization treatment is not particularly limited, and is not particularly limited as long as it is a pulverizer that can mainly apply impact stress. Examples of the pulverizer include high-speed rotary impact pulverizers, and more specifically, a sample mill, a hammer mill, a pin mill, or the like can be used. Among them, the pin mill is preferred, in that each of the components is more uniformly mixed and the advantageous effects of the second aspect of the present invention are more excellent.

The high-speed rotary impact pulverizer includes those in which a sample is allowed to crash into a rotor rotating at a high speed, to achieve refinement by the impact force, and examples include a hammer type of a hammer mill type fitted with a fixing or swinging impactor to the rotor, a rotary disk type of a pin mill type fitted with pins and an impact head to the rotating disk, an axial flow type in which a sample is pulverized while being transported to the shaft direction and an annular type that refines the particles in a narrow annular portion, and the like. More specifically, examples include hammer mills, pin mills, screen mills, turbo type mills, centrifugal type mills, and the like.

When this step is performed by the high-speed rotary impact pulverizer, it is preferred to be spheroidized at a rotational speed of usually 100 rpm or more, preferably 1500 rpm or more, and usually 20000 rpm or less. Pulverization proceeds by an excess impact force rather than spheroidization. Therefore, it is preferred that the impact rate is about 20 m/sec to 100 m/sec.

Since spheroidization treatment is treated at low impact force, unlike pulverization, it is usually preferred to perform circulation treatment in this step. The treatment time varies depending on the type and charge amount of the used pulverizer or the like, and is usually within 2 minutes, and the treatment time ends in about 10 seconds if it is a device in which a pin or a collision plate is appropriately arranged.

Further, the spheroidization treatment is preferably performed in air. When the same treatment with nitrogen gas flow is performed, there is a danger of firing when opened to atmosphere.

The size of the spherical mixture obtained by the spheroidization treatment is not particularly limited, but the particle diameter (D50: 50% volume particle diameter) of the spherical mixture is preferably 2 to 40 µm, more preferably 5 to 35 µm, and further preferably 5 to 30 µm, in that the advantageous effects of the second aspect of the present invention are more excellent.

D50 corresponds to a particle diameter at the 50% cumulative from the fine particle side of the cumulative particle size distribution measured by a laser diffraction scattering method.

In the measurement, the spherical mixture is added to a liquid and vigorously mixed by using ultrasonic wave and the like, the prepared dispersion is introduced to an apparatus as a sample, and the measurement is performed. As the liquid, water or alcohol or a low-volatile organic solvent is preferably used in terms of operation. At this time, the obtained particle size distribution diagram preferably exhibits a normal distribution.

### <Heating Step>

A heating step is a step of subjecting the product (spherical mixture) obtained in the above step to a heating treatment, to produce a generally spherical composite active material for lithium secondary batteries (composite active material). The composite active material includes a graphite component derived from graphite, a battery active material, a hard carbon, soft carbon or amorphous carbon, and at least one inorganic substance selected from the group consisting of a metal oxide and an inorganic solid electrolyte, and the battery active material is mainly contained in the graphite component as will be described below.

With respect to conditions of the heating treatment, a heating temperature is preferably 500°C or higher, more preferably 700°C or higher, and further preferably 800°C or higher, in that the advantageous effects of the second aspect of the present invention are more excellent. The upper limit is not particularly limited, but the upper limit is preferably 2000°C or lower, more preferably 1500°C or lower, and further preferably 1000°C or lower, from the viewpoint of heat resistance of the composite active material.

In addition, a heating time is preferably 0.5 hours or more and more preferably one hour or more. The upper limit is not particularly limited, but is five hours or less in many cases, in that the advantageous effects of the invention are saturated and fine crystals of the battery active material has preferred sizes.

The heating treatment is preferably carried out under an inert atmosphere from the viewpoint of preventing oxidation of the battery active material or carbon.

### <<Aspect B>>

Aspect B of the method for producing the composite active material for lithium secondary batteries according to the second aspect of the present invention includes a mixing step of mixing predetermined components, a spheroidization step of subjecting the obtained product (mixture) to a spheroidization treatment, a heating step of subjecting the obtained product (spherical mixture) to a heating treatment, and an addition step of contacting the obtained product with an additive and subjecting it to a heating treatment.

Hereinbelow, the used materials and procedures thereof will be described in detail by each step.

### <Mixing Step>

A mixing step is a step of mixing graphite having a specific surface area of 10 m²/g or more, a battery active material capable of combining with lithium ions, and a carbon precursor with one another, to obtain a mixture.

In this step, since the mixing is carried out by the same procedure using the same materials (graphite, battery active material, and carbon precursor) as in the mixing step of Aspect A described above except for not using the above-described additive, the detailed description thereof will not be presented.

### <Spheroidization Step>

A spheroidization step is a step of subjecting the product (the mixture containing the graphite, the battery active material, and the carbon precursor) obtained in the mixing step to a spheroidization treatment, to produce a spherical mixture.

The procedure of the spheroidization treatment carried out in this step is similar to the procedure of the spheroidization step in Aspect A described above, and the detailed description thereof will not be presented herein.

### <Heating Step>

A heating step is a step of subjecting the product (spherical mixture) obtained in the above step to a heating treatment, to produce a generally spherical product.

The procedure of the heating treatment carried out in this step is similar to the procedure of the heating step in Aspect A described above, and the detailed description thereof will not be presented herein.

### <Addition Step>

An addition step is a step of contacting the product (the mixture containing the graphite component, the battery active material, and the hard carbon, soft carbon or amorphous carbon) obtained in the above-described heating step with the above-described additive and then subjecting the obtained mixture to a heating treatment, to produce a generally spherical composite active material for lithium secondary batteries (composite active material). By carrying out this step, at least one inorganic substance selected from the group consisting of the metal oxide and the inorganic solid electrolyte is added to the product obtained in the heating step.

The additive used in this step is as described above, and the description thereof will not be presented.

As the procedure of this step, first, the product obtained in the heating step and the additive contact with each other. An example of a method for contacting both of them may include, for example, a method for mixing the product with the additive in the presence of a solvent without being particularly limited. According to this method, the additive easily penetrates into pores existing in the product and, consequently, the additive easily adheres onto the surface of the battery active material inside the product.

Kinds of the solvent used in this method are not particularly limited, but may include the solvent or the like used in the mixing step of the above-described Aspect A.

In addition, with respect to the amount of the additive to be used, an optimum amount is appropriately used depending on the amount of the battery active material in the product, but the additive is preferably used to be the mixing ratio of the graphite and the additive described in the mixing step of the above-described Aspect A in general.

After mixing the product with the additive in the presence of the solvent, a drying treatment may be carried out to remove the solvent, if necessary. A method of the drying treatment is not particularly limited, but may include a method for removing a solvent by a heating treatment.

With respect to conditions of the heating treatment to be carried out after contact of the product and the additive contact, optimum conditions are appropriately selected depending on, for example, the kinds of additives to be used, but heating conditions of in heating step of the above-described Aspect A is preferred in that the advantageous effects of Aspect B of the present invention are more excellent.

### <<Composite active material for lithium secondary batteries>>

The composite active material for lithium secondary batteries obtained through the above-described steps (Aspect A or Aspect B) has a generally spherical shape and contains the graphite component, the battery active material, the hard carbon, soft carbon or amorphous carbon, and at least one inorganic substance selected from the group consisting of the metal oxide and the inorganic solid electrolyte. In the composite active material, the battery active material, the hard carbon, soft carbon or amorphous carbon, and the inorganic substance are mostly contained in the graphite component. At least a portion of the surface of the battery active material is preferably covered with the inorganic substance in that the advantageous effects of the second aspect of the present invention are more excellent, and the battery active material is preferably contained in the inorganic substance (the surface of the battery active material is covered with the inorganic substance). In addition, at least a portion of the surface of the graphite component is preferably covered with the inorganic substance in that the advantageous effects of the second aspect of the present invention are more excellent.

Hereinbelow, the obtained composite active material will be described in detail.

The shape of the composite active material has a generally spherical shape by the above treatment. The generally spherical intends that the composite active material has a structure in which the composite active material is rounded, and has a shape having no sharp edge (ridge and weave) generally found in crushed particles.

More specifically, the generally spherical represents a shape of the particles of the composite active material having an aspect ratio that is the ratio of a major axis to a minor axis (major axis/minor axis) is in the range of about 1 to 3 (1 to 2 is more preferable, in that the advantageous effects of the second aspect of the present invention are more excellent). The aspect ratio means a value obtained by obtaining major axis/minor axis of each particle for at least 100 particles, and calculating the arithmetic mean of these values (arithmetic mean).

Here, the minor axis described above refers to a distance between two parallel lines to be the shortest distance among the combinations of the two parallel lines that contact the outside of the particles to be observed by a scanning electron microscopy or the like, and sandwich the particles. On the other hand, the major axis refers to a distance between two parallel lines to be the longest distance among the combinations of the two parallel lines in a direction perpendicular to the parallel lines determining the minor axis that contact the outside of the particles. A rectangle formed by these four lines is to be a size that the particles right fit therein.

The area ratio of the battery active material exposed to the surface of the composite active material observed by scanning electron microscope (SEM) observation at an accelerating voltage of 10 kV or less is 5% or less. Among them, the area ratio is more preferably 2% or less, and further preferably 1% or less. The lower limit is not particularly limited, and examples include 0%. When the area ratio is within the above range, then the amount of the battery active material exposed to the surface of the composite active material is small, and as a result, a volume expansion of the battery material containing the composite active material is suppressed and the lithium secondary battery containing the composite active material exhibits excellent cycle characteristics.

When the area ratio is outside the above range (more than 5%), falling off of the battery active material is likely to occur, and the composite active material is inferior in cycle characteristics or the volume expansion of the battery material including the composite active material is enlarged.

As a method of measuring the area ratio, at least 100 or more composite active material are observed by a scanning electron microscope (SEM) at an accelerating voltage of 10 kV or less (preferably, magnification of 2000 times or more), and the area ratio of the battery active material occupied on the surface of each composite active material is measured, and the arithmetic mean of these values is calculated.

At the composite active material obtained in the Aspect B described above, the area ratio of the battery active material exposed to the surface of the composite active material observed by scanning electron microscope (SEM) observation at an accelerating voltage of 10 kV or less is 5% or less, and inorganic materials may be exposed on the surface thereof. That is to say, a portion of inorganic materials obtained during the addition step may be exposed on the composite active material.

The area ratio of the graphite component exposed to the surface of the composite active material for lithium secondary batteries observed by scanning electron microscope (SEM) observation at an accelerating voltage of 10 kV or less is preferably 95% or more. Among them, the area ratio is more preferably 98% or more, and further preferably 99% or more. The upper limit is not particularly limited, and examples include 100%. When the area ratio is within the above range, then the amount of the battery active material exposed to the surface of the composite active material is small, and as a result, a volume expansion of the battery material containing the composite active material is suppressed and the cycle characteristics of the lithium secondary battery containing the composite active material exhibits excellent cycle characteristics.

As a method of measuring the area ratio, at least 100 or more composite active material are observed by a scanning electron microscope (SEM) at an accelerating voltage of 10 kV or less (preferably, magnification of 2000 times or more), and the area ratio of the graphite component occupied on the surface of each composite active material is measured, and the arithmetic mean of these values is calculated.

Further, as a characteristic of the composite active material for lithium secondary batteries, when the composite active material is observed by scanning electron microscope (SEM) observation at an accelerating voltage of 10 kV or less, it is possible to directly observe the battery active material that transmits a thin graphite layer and is contained in a state being sandwiched in the graphite layer.

Further, preferred embodiments of the composite active material include an embodiment in which the edge portion of the graphite is substantially not exposed to the surface. The edge portion of the graphite is not exposed to the surface, whereby the decomposition of the electrolyte solution and the destruction of the graphite that are likely to occur at the charge-discharge cycle are further suppressed, and consequently the improvement of cycle characteristics is provided.

The graphite component contained in the composite active material is a component derived from the above-described graphite. In order to carry out the spheroidization treatment at the time of forming the composite active material, the above-described graphite may have a more folded structure in the composite active material.

The content of the battery active material contained in the composite active material can be appropriately adjusted depending on the contents of the graphite and the battery active material in the mixing step described above.

Among them, the content of the battery active material is preferably 10% by mass or more, more preferably 20% by mass or more, and particularly preferably 30% by mass or more, based on the total amount of the composite active material, in that the advantageous effects of the second aspect of the present invention are more excellent. The upper limit is preferably 80% by mass or less, and more preferably 70% by mass or less.

Even when the content of the battery active material contained in the obtained composite active material is within the above range, the area ratio of the graphite exposed to the surface of the composite active material is within the above range.

The shape of the battery active material contained in the composite active material is not particularly limited, but is typically a generally spherical shape in many cases.

The average particle diameter of the battery active material contained in the composite active material is not particularly limited, but is preferably 1 µm or less, more preferably 0.5 µm or less, further preferably 0.3 µm or less, and particularly preferably 0.1 µm or less, in that the advantageous effects of the second aspect of the present invention are more excellent. The lower limit is not particularly limited, but the smaller is preferable (in many cases, 50 nm or more).

In a method for measuring an average particle diameter, a cross section of the composite active material is observed by electron microscope, diameters are measured with respect to at least 10 battery active materials, and the measured diameters are arithmetically averaged to obtain the value of the average particle diameter. When the battery active material has not a true circle shape, a circle equivalent diameter is used. The circle equivalent diameter refers to a diameter of the circle when assuming the shape of the measured battery active material as a circle having the same projected area as the projected area of the battery active material.

The composite active material contains hard carbon, soft carbon or amorphous carbon derived from a carbon precursor.

The content of the hard carbon, soft carbon or amorphous carbon contained in the composite active material can be appropriately adjusted depending on the content of the carbon precursor in the mixing step described above.

Among them, the content of the hard carbon, soft carbon or amorphous carbon is 1% by mass or more, preferably 2% by mass or more, and more preferably 5% by mass or more, based on the total amount of the composite active material, in that the advantageous effects of the second aspect of the present invention are more excellent. The upper limit is 30% by mass or less, and preferably 20% by mass or less.

The composite active material contains at least one inorganic substance selected from the group consisting of the metal oxide and the inorganic solid electrolyte derived from the additive described above. The kinds of the metal oxide and the inorganic solid electrolyte are as described above. In addition, as described above, the inorganic substance is preferably disposed so as to cover the surface of the battery active material, in that the advantageous effects of the second aspect of the present invention are more excellent.

The content of the inorganic substance contained in the composite active material can be appropriately adjusted depending on the content of the carbon precursor in the mixing step described above.

Among them, the content of the inorganic substance is 0.01 to 30% by mass, and preferably 0.1 to 10% by mass, based on the total amount of the composite active material, in that the advantageous effects of the second aspect of the present invention are more excellent.

The particle diameter of the composite active material (D50: 50% volume particle diameter) is not particularly limited, but is preferably 2 to 40 µm, more preferably 5 to 35 µm, and further preferably 5 to 30 µm, in that the advantageous effects of the second aspect of the present invention are more excellent.

The particle diameter (D90: 90% volume particle diameter) is not particularly limited, but is preferably 10 to 75 µm, more preferably 10 to 60 µm, and most preferably 20 to 45 µm, in that the advantageous effects of the second aspect of the present invention are more excellent.

Furthermore, the particle diameter (D10: 10% volume particle diameter) is not particularly limited, but is preferably 1 to 20 µm, and more preferably 2 to 10 µm, in that in that the advantageous effects of the second aspect of the present invention are more excellent.

D10, D50 and D90 respectively correspond to a particle diameter at the 10% cumulative, 50% cumulative and 90% cumulative from the fine particle side of the cumulative particle size distribution measured by a laser diffraction scattering method.

In the measurement, the composite active material is added to a liquid and vigorously mixed by using ultrasonic wave and the like, the prepared dispersion is introduced to an apparatus as a sample, and the measurement is performed. As the liquid, water or alcohol or a low-volatile organic solvent is preferably used in terms of operation. At this time, the obtained particle size distribution diagram preferably exhibits a normal distribution.

The bulk density of the composite active material is not particularly limited, but is preferably 0.5 g/cm³ or more, and more preferably 0.7 g/cm³, in order to increase the capacity per volume of the obtained composite active material. The upper limit is not particularly limited.

The method of measuring the bulk density is the same as the method of measuring the bulk density of the graphite described above, except using a 25 mL measuring cylinder.

The tap density of the composite active material is not particularly limited, but is preferably 0.8 g/cm³ or more and more preferably 1.0 g/cm³ or more, in order to increase the capacity per volume of the obtained composite active material. The upper limit is not particularly limited, and is preferably 1.6 g/cm³ or less.

As the method of measuring the tap density, a sample is placed in a 25 mL measuring cylinder and is subjected to tapping, and the sample weight at the time that the capacity change is lost is divided by the sample volume.

The specific surface area (BET specific surface area) of the composite active material is not particularly limited, but is preferably 100 m²/g or less and more preferably 50 m²/g or less, in that cycle characteristics of a lithium secondary battery using the obtained composite active material are more excellent. The lower limit is not particularly limited, and is preferably 0.1 m²/g or more.

As the method of measuring the specific surface area (BET specific surface area) of the composite active material, a sample is vacuum dried at 300°C for 30 minutes, and then the specific surface area is measured according to the one-point method of nitrogen adsorption.

It is possible to coat the surface of the composite active material with carbon, as necessary. By carrying out the treatment, it is possible to adjust the surface area of the composite active material, to enhance the electrochemical stability.

The method of coating with carbon is not particularly limited, but examples include CVD method. More specifically, it is preferred to flow a gas such as toluene, to carry out a CVD treatment at 750 to 1100°C.

### <Lithium Secondary Battery>

The composite active material described above is useful as an active material used for a battery material (electrode material) used in the lithium secondary battery.

The characteristics of the battery material using the composite active material include that the capacity close to the theoretical value of the battery material is obtained, and the expansion is suppressed. The battery used the above described composite active material exhibits superior cycle characteristics.

The composite active material described above is particularly preferably used for negative electrode. Hereinbelow, the embodiment will be described in which a composite active material is used for negative electrode.

The method for producing a negative electrode for a lithium secondary battery using a composite active material is not particularly limited, and a known method can be used.

For example, a composite active material and a binder can be mixed and formed into a paste using pressure molding or a solvent, and applied on a copper foil to obtain a negative electrode for a lithium secondary battery. More specifically, 92 g of a composite active material, 62 g of a 13% PVDF/NMP solution, 0.5 g of conductive carbon black, and 29 g of NMP are mixed, and good slurry can be obtained using a double arm mixer usually used.

As a current collector other than a copper foil, it also can be used a material having a three-dimensional structure, in that the cycle of the battery is more excellent. Examples of the material of a current collector having a three-dimensional structure include carbon fibers, sponge-like carbon (sponge-like resin coated with carbon), metals, and the like.

The current collector having a three-dimensional structure (porous current collectors) includes plain weave wire mesh, expanded metal, lath net, metal foam, metal woven fabric, metal nonwoven fabric, carbon fiber woven fabric, and carbon fiber nonwoven fabric, as the porous body of the conductor of metal and carbon.

As the used binder, a known material can be used, for example, a fluorine resin such as polyvinylidene fluoride or polytetrafluoroethylene, SBR, polyethylene, polyvinyl alcohol, carboxymethyl cellulose, glue or the like is used.

In addition, examples of the solvent include water, isopropyl alcohol, N-methylpyrrolidone, dimethylformamide and the like.

At the time of forming a paste, as necessary, stirring and mixing may be carried out using a known stirrer, mixer, kneading machine, kneader or the like, as described above.

When preparing a coating slurry using a composite active material, it is preferred to add conductive carbon black, carbon nanotube or a mixture thereof as the conductive material. The shape of the composite active material obtained by the above step is often relatively granulated (particularly, generally spheroidized), and the contact between particles tends to be a point contact. To avoid this adverse effects, examples include a method of blending carbon black, carbon nanotube or a mixture thereof with the slurry. The carbon black, carbon nanotube or the mixture thereof can intensively agglomerate to a capillary portion formed by contact of the composite active material during drying of the slurry solvent, thus loss of contact (increased resistance) with cycles can be prevented.

The blending amount of the carbon black, carbon nanotube or the mixture thereof is not particularly limited, but is preferably 0.2 to 4 parts by mass and more preferably 0.5 to 2 parts by mass, based on 100 parts by mass of the composite active material. Examples of the carbon nanotube are single-walled carbon nanotubes and multi-walled carbon nanotubes.

### (Positive Electrode)

As the positive electrode used in a lithium secondary battery having a negative electrode obtained by using the composite active material, a positive electrode using a known positive electrode material can be used.

The method for producing a positive electrode includes known methods, and includes a method of applying a positive electrode material and a positive electrode mixture including a bonding agent and a conductive agent to the surface of the current collector. The positive electrode material (positive electrode active material) includes metal oxides such as chromium oxide, titanium oxide, cobalt oxide and vanadium pentoxide, lithium metal oxides such as LiCoO₂, LiNiO₂, LiNi_{1-y}Co_{y}O₂, LiNi_{1-x-y}CoₓAl_{y}O₂, LiMnO₂, LiMn₂O₄ and LiFeO₂, chalcogen compounds of a transition metal such as titanium sulfide or molybdenum sulfide, conjugated polymer materials having conductivity such as polyacetylene, polyparaphenylene and polypyrrole, and the like.

### (Electrolyte)

As an electrolyte used in a lithium secondary battery having a negative electrode obtained by using the composite active material, a known electrolyte can be used.

For example, as an electrolyte salt contained in the electrolyte, lithium salts such as LiPF₆, LiBF₄, LiAsF₆, LiClO₄, LiB (C₆H₅), LiCl, LiBr, LiCF₃SO₃, LiCH₃SO₃, LiN (CF₃SO₂)₂, LiC(CF₃SO₂)₃, LiN(CF₃CH₂OSO₂)₂, LiN(CF₃CF₃OSO₂)₂, LiN(HCF₂CF₂CH₂OSO₂)₂, LiN{(CF₃)₂CHOSO₂}₂, LiB{(C₆H₃(CF₃)₂}₄, LiN(SO₂CF₃)₂, LiC(SO₂CF₃)₃, LiAlCl₄ or LiSiF₆ can be used. LiPF₆ and LiBF₄ are particularly preferable from the viewpoint of oxidation stability.

The electrolyte salt concentration in the electrolyte solution is preferably 0.1 to 5 mol/L, and more preferably 0.5 to 3 mol/L.

As the solvent used in the electrolyte, for example, a carbonate such as ethylene carbonate, propylene carbonate, dimethyl carbonate or diethyl carbonate, an ether such as 1,1- or 1,2-dimethoxyethane, 1,2-diethoxyethane, tetrahydrofuran, 2-methyltetrahydrofuran, γ-butyrolactone, 1,3-dioxofuran, 4-methyl-1,3-dioxolane, anisole or diethyl ether, a thioether such as sulfolane or methyl sulfolane, a nitrile such as acetonitrile, chloronitriles or propionitrile, an aprotic organic solvent such as trimethyl borate, tetramethyl silicate, nitromethane, dimethylformamide, N-methylpyrrolidone, ethyl acetate, trimethyl orthoformate, nitrobenzene, benzoyl chloride, benzoyl bromide, tetrahydrothiophene, dimethyl sulfoxide, 3-methyl-2-oxazoline, ethylene glycol or dimethyl sulfite can be used.

Additives such as fluoroethylene carbonate may be added to the electrolyte. These additives are known to form stable protective film over the silicon surface and to improve cycle characteristics.

Instead of the electrolyte, a polyelectrolyte such as a polymer solid electrolyte and a polymer gel electrolyte may be used. As the polymer compound constituting the matrix of the polymer solid electrolyte or polymer gel electrolyte, an ether polymer compound such as polyethylene oxide or a cross-linked product thereof, a methacrylate polymer compound such as poly methacrylate, an acrylate polymer compound such as polyacrylate, and a fluorine polymer compound such as polyvinylidene fluoride (PVDF) and a vinylidene fluoride-hexafluoropropylene copolymer are preferred. It can also be used as a mixture thereof. From the viewpoint of oxidation-reduction stability, a fluorine polymer compound such as PVDF or a vinylidene fluoride-hexafluoropropylene copolymer are particularly preferred.

### (Separator)

As the separator used in the lithium secondary battery having a negative electrode obtained by using the composite active material, a known material can be used. For example, woven fabric, nonwoven fabric, synthetic resin microporous membrane and the like are exemplified. Synthetic resin microporous membrane is preferred, and among them, polyolefin microporous membrane is suitable from the viewpoint of membrane thickness, membrane strength, membrane resistance, and the like. Specifically, polyethylene and polypropylene microporous membranes, microporous membranes that combine these membranes, and the like are preferred.

A lithium secondary battery can have a form such as cylindrical, rectangular or button, according to a conventional method, by using the negative electrode, positive electrode, separator, electrolyte and other battery components described above (for example, current collector, gasket, sealing plate, case, and the like).

The lithium secondary battery of the second aspect of the present invention is used in various mobile electronic devices, and can be used particularly in laptop computers, laptop word processors, palmtop (pocket) personal computers, mobile phones, portable fax machines, portable printers, headphone stereos, video cameras, portable television, portable CD, portable MD, electric beard, electronic notebooks, transceivers, electric power tools, radios, tape recorders, digital cameras, portable copiers, portable game machines, and the like. In addition, further, the lithium secondary battery can be used as a secondary battery of electric vehicles, hybrid vehicles, vending machines, electric carts, storage systems for load leveling, condensers for home use, distributed power storage systems (built in stationary electric appliances), emergency power supply systems, and the like.

### EXAMPLES

Hereinafter, the present invention will be described in more detail by examples, but the present invention is not limited thereto.

### <<First Aspect (Part 1)>>

### <Example A1>

### (Preparation of Expanded Graphite)

Flake natural graphite having an average particle diameter of 1 mm was immersed in a mixed acid of 9 parts by weight of sulfuric acid and 1 part by weight of nitric acid at room temperature for 1 hour, thereafter the mixed acid was removed with No. 3 glass filter to obtain an acid treated graphite. Furthermore, the acid treated graphite was washed with water and then dried. When 5 g of the dried acid treated graphite was stirred in 100 g of distilled water, and the pH was measured after 1 hour, pH was 6.7. The dried acid treated graphite was put into a vertical electric furnace under a nitrogen atmosphere set at 850°C, to obtain an expanded graphite. The bulk density of the acid treated graphite was 0.78 g/cm³. The specific surface area of the expanded graphite was 42 m²/g, the bulk specific gravity was 0.023 g/cm³, and the average thickness of the layer of the laminated graphene sheets (folds of graphite) was 21 nm.

### (Mixing Step)

Metal Si having an average particle diameter of 0.3 µm (15 parts by mass) was put into 3000 parts by mass of ethanol in a beaker, and the mixture was stirred for 2 minutes.

The expanded graphite (35 parts by mass) was added to the ethanol in which metal Si was dispersed, to prepare a homogeneous mixed slurry containing the expanded graphite and metal Si fine powder. Using an evaporator, the ethanol was recovered from this slurry, to obtain a powder mixture.

### (Compression Step)

The mixture obtained above was compressed using three roll mills (manufactured by EXAKT Co., pressing pressure 5 kgf/mm) to obtain a sheet-like compressed mixture.

### (Spheroidization Step)

The powder mixture obtained above was granulated and molded into spherical shape using a sample mill (manufactured by OSAKA CHEMICAL Co. PM-2005M) (rotational speed: 25000 rpm, processing time: 15 minutes), to obtain a generally spherical composite active material for lithium secondary batteries including 70% by mass of graphite and 30% by mass of metal Si.

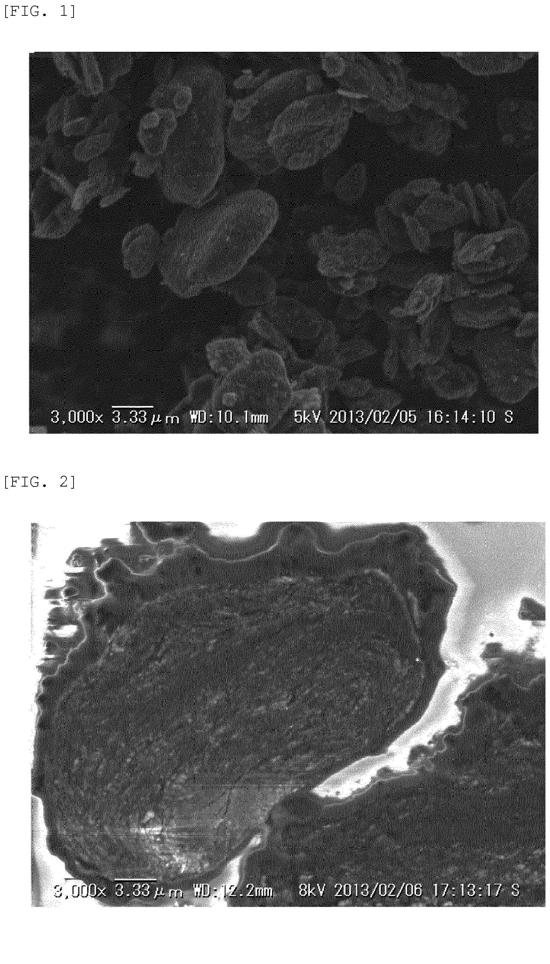

The physical properties thereof are as follows. Bulk density: 0.66 g/cm³, tap density: 1.13 g/cm³, D90 particle size distribution: 20 µm, D50: 12 µm, D10: 4 µm, specific surface area: 10.5 m²/g, shape: refer to SEM in FIG. 1.

FIG. 1 is a diagram in which a secondary electron image of the composite active material of Example A1 is observed using SEM (scanning electron microscope) at a low accelerating voltage of 10 kV or less. As can be seen from the drawing, it is possible to clearly observe Si metal particles of the battery active material by transmitting the graphite surface. In view of the above, in the composite active material, it is possible to directly observe that it is a structure in which the battery active material sandwiched with a thin graphite layer. Also, it can be confirmed at the same time that there is very little battery active material exposed to the surface, and the graphite edge surface is not present on the surface of the composite.

More specifically, the area ratio of the graphite that was exposed to the surface of the composite active material for lithium secondary batteries observed by SEM observation was 97%, and the area ratio of the exposed Si metal was 3%.

In addition, it can be confirmed that its shape is constituted by flat particles having any of a rounded disk shape, a flattened ellipsoidal body shape, or a broad bean-type shape.

FIG. 2 is a diagram in which a secondary electron image of the cross section of a composite active material of Example A1 using SEM. In order to observe the cross section of the composite active material, the cross section was polished in a state where the composite active material was buried in a resin. It can be confirmed that the composite active material located at a slight left from the center in FIG. 2 is constituted by flat particles having a rounded disk shape. In addition, it can be confirmed in the composite active material that structures in which particles of metal Si (color: white) as a battery active material capable of combining with lithium ions are sandwiched between folds consisting of graphite (color: gray) are stacked. Furthermore, it can be also confirmed in the composite active material that some of folds constituting the structure in which the particles of the battery active material capable of combining with lithium ions are sandwiched between the folds consisting of graphite are inclined at an almost right angle from a vertical axis direction of a flat surface, the some of folds being positioned other than at a vicinity of both ends in the longitudinal direction in the cross section of the composite active material and the structure in which the particles of the battery active material capable of combining with lithium ions are sandwiched between the folds consisting of graphite has an orientation that is generally parallel with the flat surface.

As a result of calculating the average particle diameter of particles of metal Si as the battery active material from an SEM image of FIG. 2 and an SEM cross-sectional image similar thereto, the average particle diameter was 0.3 µm, which was identical to the measured value before the mixing step.

### (Negative Electrode Production)

92 parts by mass of the composite active material, 62 parts by mass of a PVDF containing NMP solution (PVDF (polyvinylidene fluoride) (content: 13%), 0.5 part by mass of conductive carbon black, and 29 parts by mass of NMP were weighed, and mixed for 3 minutes using a double arm mixer to prepare a coating slurry.

### (Positive Electrode Production)

84 parts by mass of lithium metal oxide (NCA), 66.6 parts by mass of a PVDF containing NMP solution (PVDF (polyvinylidene fluoride) (content: 12%), 8 parts by mass of conductive carbon black, and 35 parts by mass of NMP were weighed, and mixed for 3 minutes using a double arm mixer to prepare a coating slurry. This slurry was coated on an aluminum foil and dried to produce a positive electrode.

### (Half Cell Preparation)

Using Li metal as a counter electrode, a half cell was prepared using a LiPF₆ electrolyte with ethylene carbonate : diethyl carbonate = 1 : 3, 1.2 mol/L.

### (Full Cell Production)

Using the negative electrode and the positive electrode described above as electrodes, a full cell was prepared using a LiPF₆ electrolyte with ethylene carbonate : diethyl carbonate = 1 : 3, 1.2 mol/L, and the following battery evaluation was performed.

### (Battery Evaluation: Irreversible Capacity)

The charge-discharge capacity of the obtained composite active material were evaluated using the half cell.

A capacity confirmation test was performed using both charging and discharging rate of C/20, a cut-off voltage at the charging side of 0.01 V, and a cut-off voltage at the discharging side of 1.5 V. A charge capacity at a first cycle was 1220 mAh/g, a discharge capacity at a first cycle was 1050 mAh/g, and an irreversible capacity thereof was 170 mAh/g.

### (Battery Evaluation: Charge-Discharge Capacity and Cycle Characteristics)

The charge-discharge capacity and cycle characteristics of the obtained composite active material were evaluated using the full cell.

A cycle experiment was performed using both charging and discharging rate of C/3, a cut-off voltage at the charging side of 4.0 V, and a cut-off voltage at the discharging side of 3.0 V. Even after 60 cycles, a maintenance rate of the high discharge capacity of 81% was observed at the charge-discharge cycle.

### (Evaluation: Rate Characteristics)

Rate characteristics of the composite active material were evaluated, using the previously prepared full cell.

Charging was performed at C/10, and discharging was performed at C/20, C/10, C/5, C/2, 1C, 2C, and 4C. The cut-off voltage at the charging side was set to 4.1 V, and the cut-off voltage at the discharging side was set to 2.7 V. The very high discharge capacity as 98% of the discharge capacity obtained at C/20 was obtained at C/10; the very high discharge capacity as 96% of the discharge capacity obtained at C/20 was obtained at C/5; the very high discharge capacity as 93% of the discharge capacity obtained at C/20 was obtained at C/2; the very high discharge capacity as 90% of the discharge capacity obtained at C/20 was obtained at 1C; the very high discharge capacity as 84% of the discharge capacity obtained at C/20 was obtained at 2C, and the very high discharge capacity as 67% of the discharge capacity obtained at C/20 was obtained even at 4C, thus it was confirmed that this material had very good rate characteristics.

### <Comparative Example A1>

A composite active material was produced in the same manner as in Example A1 except that only the compression step was removed.

The physical properties thereof are as follows. Bulk density: 0.36 g/cm³, tap density: 0.73 g/cm³, particle size distribution D90: 29 µm, D50: 18 µm, D10: 5 µm, and specific surface area: 9.4 m²/g.

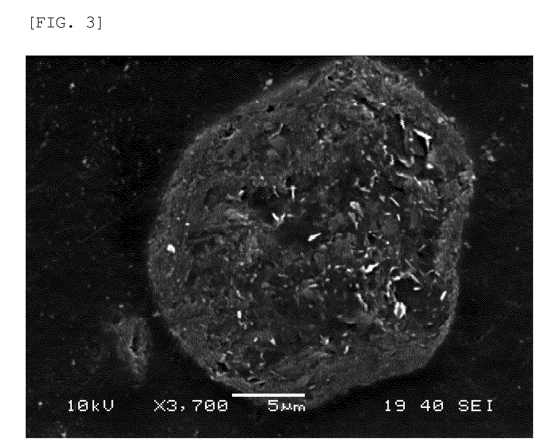

FIG. 3 is a diagram in which a secondary electron image of a cross section of the composite active material of Comparative Example A1 is observed using SEM. In order to observe the cross section of the composite active material, the cross section was polished in a state where the composite active material was buried in a resin. It can be confirmed in the composite active material located at the center in FIG. 2 that structures in which particles of metal Si as a battery active material capable of combining with lithium ions are sandwiched between folds consisting of graphite are stacked as in Example A1. However, the composite active material of Comparative Example A1 differs from the composite active material of Example A1 in that the shape thereof is close to a spherical shape and is not in any form of the rounded disk, the flattened ellipsoidal body, or the broad bean type. In addition, specific regularity is not seen in the orientation of the folds consisting of graphite, and specific regularity is not also seen in the orientation of the structure in which the particles of the battery active material capable of combining with lithium ions are sandwiched between the folds consisting of graphite.

### (Battery Evaluation: Irreversible Capacity)

Negative electrode and positive electrode were prepared in the same manner as in Example A1 using the composite active material, a half cell and a full cell were prepared using the same, and the charge-discharge capacity of the composite active material obtained under the same conditions as in Example A1 was evaluated using the half cell. A charge capacity at a first cycle was 1280 mAh/g, a discharge capacity at a first cycle was 1050 mAh/g, an irreversible capacity thereof was 230 mAh/g, and the irreversible capacity thereof was higher than that in Example A1.

### (Battery Evaluation: Charge-Discharge Capacity and Cycle Characteristics)

The charge-discharge capacity and cycle characteristics of the obtained composite active material were evaluated using the full cell prepared in the same manner as in Example A1 using the composite active material.

A cycle experiment was performed using both charging and discharging rate of C/3, a cut-off voltage at the charging side of 4.0 V, and a cut-off voltage at the discharging side of 3.0 V. After 60 cycles, a maintenance rate of the high discharge capacity of 65% was observed at the charge-discharge cycle.

### (Evaluation: Rate Characteristics)

Rate characteristics of the composite active material were evaluated, using the previously prepared full cell. Charging was performed at C/10, and discharging was performed at C/20, C/10, C/5, C/2, 1C, 2C, and 4C. The cut-off voltage at the charging side was set to 4.1 V, and the cut-off voltage at the discharging side was set to 2.7 V. The discharge capacity as 96% of the discharge capacity obtained at C/20 was obtained at C/10; the discharge capacity as 82% of the discharge capacity obtained at C/20 was obtained at C/5; the discharge capacity as 75% of the discharge capacity obtained at C/20 was obtained at C/2; the discharge capacity as 62% of the discharge capacity obtained at C/20 was obtained at 1C; the discharge capacity as 53% of the discharge capacity obtained at C/20 was obtained at 2C, and the discharge capacity as 35% of the discharge capacity obtained at C/20 was obtained even at 4C, thus it was confirmed that this material had rate characteristics.

### <<First Aspect (Part 2)>>

### <Example B1>

### (Preparation of Expanded Graphite)

Flake natural graphite having an average particle diameter of 1 mm was immersed in a mixed acid of 9 parts by weight of sulfuric acid and 1 part by weight of nitric acid at room temperature for 1 hour, thereafter the mixed acid was removed with No. 3 glass filter to obtain acid treated graphite. Furthermore, the acid treated graphite was washed with water and then dried. When 5 g of the dried acid treated graphite was stirred in 100 g of distilled water, and the pH was measured after 1 hour, pH was 6.7. The dried acid treated graphite was put into a vertical electric furnace under a nitrogen atmosphere set at 850°C, to obtain expanded graphite. The bulk density of the acid treated graphite was 0.78 g/cm³. The specific surface area of the expanded graphite was 83 m²/g, the bulk specific gravity was 0.011 g/cm³, and the average thickness of the layer of the laminated graphene sheets was 16 nm.

### (Silicon nanoparticle Forming Step)

Silicon monoxide (SiO) fine powder (6 parts by weight) having an average particle diameter of 2 µm was heated at 990°C for two hours under nitrogen to form a composite containing silicon dioxide and silicon nanoparticles by a disproportionation reaction. The formed product was added to 100 parts by weight of ethanol, 100 parts by weight of water, and 42 parts by weight of 48% hydrofluoric acid and was stirred at room temperature for 1 hour, the silicon dioxide was dissolved, and the silicon nanoparticles (average particle diameter: 10 nm) was separated. 12 parts by weight of the expanded graphite, which was previously formed, was put into a solution containing the silicon nanoparticles and then subjected to an ultrasonic treatment while stirring was carried out, and thus the silicon nanoparticles were incorporated inside the expanded graphite. Next, suction filtration was carried out to separate a solid component consisting of the expanded graphite and the silicon nanoparticles, and washing was carried out using distilled water until filtrated liquid became neutral. After drying, 28 parts by weight of solid component could be obtained. This solid component was added with 500 parts by weight of ethanol and a phenol resin (5 parts by weight) and then was subjected to an ultrasonic treatment while stirring was carried out. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment by heating the spherical mixture at 900°C for one hour while nitrogen flowed (1 L/min). Thus, an approximately spherical composite active material for lithium secondary batteries was obtained in which the content of graphite was 60% by mass, the content of a composite containing silicon and silicon dioxide was 30% by mass, and the content of a hard carbon derived from the phenol resin was 10% by mass.

The physical properties thereof were as follows. Bulk density: 0.77 g/cm³, tap density: 1.22 g/cm³, particle size distribution D90: 48 µm, D50: 34 µm, D10: 7.7 µm, specific surface area: 28.6 m²/g, and shape: average aspect ratio: 1.75.

It was possible to clearly observe a secondary electron image of the composite active material using SEM (scanning electron microscope) at a low accelerating voltage of 10 kV or less and particles of a composite in which silicon was dispersed in silicon dioxide (hereinafter, simply also referred to as a composite) by transmitting the graphite surface.

In view of the above, in the composite active material, it was possible to directly observe that it was a structure in which the battery active material is sandwiched with a thin graphite layer. Also, it could be confirmed at the same time that there was very little composite exposed to the surface, and the graphite edge surface was not present on the surface of the composite.

More specifically, the area ratio of the graphite that was exposed to the surface of the composite active material for lithium secondary batteries observed by SEM observation was 98%, and the area ratio of the exposed composite was 2%.

In addition, it can be confirmed that the shape of the composite active material is constituted by flat particles having any of a rounded disk shape, a flattened ellipsoidal body shape, or a broad bean-type shape.

Furthermore, when the secondary electron image of the cross section of the composite active material is observed using SEM, it can be confirmed that the composite active material is constituted by flat particles having a rounded disk shape. In addition, it can be confirmed in the composite active material that structures in which particles of metal Si (color: white) as a battery active material capable of combining with lithium ions are sandwiched between folds consisting of graphite are stacked. Furthermore, it can be also confirmed in the composite active material that some of folds constituting the structure in which the particles of the battery active material capable of combining with lithium ions are sandwiched between the folds consisting of graphite are inclined at an almost right angle from a vertical axis direction of a flat surface, the some of folds being positioned other than at a vicinity of both ends in the longitudinal direction in the cross section of the composite active material and the structure in which the particles of the battery active material capable of combining with lithium ions are sandwiched between the folds consisting of graphite has an orientation that is generally parallel with the flat surface.

In addition, as a result of calculating the average particle diameter of particles of metal Si as the battery active material from the SEM cross-sectional image, the average particle diameter was identical to the measured value before the mixing step.

### (Negative Electrode Production)

92 parts by mass of the composite active material, 62 parts by mass of a PVDF containing NMP solution (PVDF (polyvinylidene fluoride) (content: 13%), 0.5 parts by mass of conductive carbon black, and 29 parts by mass of NMP were weighed, and mixed for 3 minutes using a double arm mixer to prepare a coating slurry. This slurry was coated on a copper foil and dried to produce a negative electrode.

### (Positive Electrode Production)

84 parts by mass of LiNi_{1-x-y}CoₓAl_{y}O₂, 66 parts by mass of a PVDF containing NMP solution (PVDF (polyvinylidene fluoride) (content: 12%), 8 parts by mass of conductive carbon black, and 29 parts by mass of NMP were weighed, and mixed for 3 minutes using a double arm mixer to prepare a coating slurry. This slurry was coated on an aluminum foil and dried to produce a positive electrode.

### (Half Cell Preparation)

Using Li metal as a counter electrode, a half cell was prepared using a LiPF₆ electrolyte with ethylene carbonate : diethyl carbonate = 1 : 3, 1.2 mol/L.

### (Full Cell Production)

Using the negative electrode and the positive electrode described above as electrodes, a full cell was prepared by adding a LiPF₆ electrolyte with ethylene carbonate : diethyl carbonate = 1 : 1, 1.2 mol/L and 2% by volume of fluoroethylene carbonate, and the following battery evaluation was performed.

### (Battery Evaluation: Irreversible Capacity)

The charge-discharge capacity of the obtained composite active material was evaluated using the half cell. A capacity confirmation test was performed using both charging and discharging rate of C/20, a cut-off voltage at the charging side of 0.01 V, and a cut-off voltage at the discharging side of 1.5 V. A charge capacity at a first cycle was 1210 mAh/g, a discharge capacity at a first cycle was 1035 mAh/g, and an irreversible capacity thereof was 175 mAh/g.

### (Battery Evaluation: Charge-Discharge Capacity and Cycle Characteristics)

The charge-discharge capacity and cycle characteristics of the obtained composite active material were evaluated using the full cell.

A cycle experiment was performed using both charging and discharging rate of C/3, a cut-off voltage at the charging side of 4.0 V, and a cut-off voltage at the discharging side of 3.0 V. Even after 60 cycles, a maintenance rate of the high discharge capacity of 85% was observed at the charge-discharge cycle.

### (Evaluation: Rate Characteristics)

Rate characteristics of the composite active material were evaluated, using the previously prepared full cell.

Charging was performed at C/10, and discharging was performed at C/20, C/10, C/5, C/2, 1C, 2C, and 4C. The cut-off voltage at the charging side was set to 4.1 V, and the cut-off voltage at the discharging side was set to 2.7 V. The very high discharge capacity as 97% of the discharge capacity obtained at C/20 was obtained at C/10; the very high discharge capacity as 95% of the discharge capacity obtained at C/20 was obtained at C/5; the very high discharge capacity as 91% of the discharge capacity obtained at C/20 was obtained at C/2; the very high discharge capacity as 86% of the discharge capacity obtained at C/20 was obtained at 1C; the very high discharge capacity as 81% of the discharge capacity obtained at C/20 was obtained at 2C, and the very high discharge capacity as 63% of the discharge capacity obtained at C/20 was obtained even at 4C, thus it was confirmed that this material had very good rate characteristics.

### <Example B2>

### (Preparation of Expanded Graphite)

Expanded graphite was prepared in the same procedure as in the Example B1.

### (Silicon nanoparticle Forming Step)

A methanol solution (solid component is 6 parts by weight) of colloidal silica (average particle diameter: 10 nm) and 12 parts by weight of expanded graphite were mixed with each other in 1500 parts by weight of ethanol. The ethanol was boiled while stirring was carried out, and after a degassing treatment, the ethanol was recovered from this slurry using an evaporator to obtain a powder mixture. After this powder was added with 10.4 parts by weight of a metal magnesium powder and then was stirred using a spatula, the stirred powder was put into a graphite boat and the graphite boat was covered with a graphite plate. This was held at 675°C for 12 hours to reduce the colloidal silica to silicon nanoparticles. 16 parts by weight of this reaction product was taken out and mixed with a mixture of 500 parts by weight of ethanol and 50 parts by weight of 35% HCl to remove an oxide. Next, suction filtration was carried out to separate a solid component, the solid component was subjected to washing using distilled water until filtrated liquid became neutral and then subjected to drying, and thus 10 parts by weight of solid component were obtained. This solid component was added with 500 parts by weight of ethanol and a phenol resin (2.5 parts by weight) and then was subjected to an ultrasonic treatment while being stirred. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment by heating the spherical mixture at 900°C for one hour while nitrogen flowed (1 L/min). Thus, a generally spherical composite active material for lithium secondary batteries was obtained in which the content of graphite was 60% by mass, the content of a composite containing silicon and silicon dioxide was 30% by mass, and the content of a hard carbon derived from the phenol resin was 10% by mass.

The physical properties thereof were as follows. Bulk density: 0.97 g/cm³, tap density: 1.32 g/cm³, particle size distribution D90: 58 µm, D50: 32 µm, D10: 7.9 µm, specific surface area: 32.6 m²/g, and shape: average aspect ratio: 1.73.

It was possible to clearly observe a secondary electron image of the composite active material using SEM (scanning electron microscope) at a low accelerating voltage of 10 kV or less and particles of a composite in which silicon (average particle diameter: 10 nm) was dispersed in silicon dioxide by transmitting the graphite surface (hereinafter, the silicon dioxide is simply also referred to as a composite).

In view of the above, in the composite active material, it was possible to directly observe that it was a structure in which the battery active material is sandwiched with a thin graphite layer. Also, it could be confirmed at the same time that there was very little composite exposed to the surface, and the graphite edge surface was not present on the surface of the composite.

More specifically, the area ratio of the graphite that was exposed to the surface of the composite active material for lithium secondary batteries observed by SEM observation was 98%, and the area ratio of the exposed composite was 2%.

In addition, it can be confirmed that the shape of the composite active material is constituted by flat particles having any of a rounded disk shape, a flattened ellipsoidal body shape, or a broad bean-type shape.

Furthermore, when the secondary electron image of the cross section if the composite active material is observed using SEM, it can be confirmed that the composite active material is constituted by flat particles having a rounded disk shape. In addition, it can be confirmed in the composite active material that structures in which particles of metal Si (color: white) as a battery active material capable of combining with lithium ions are sandwiched between folds consisting of graphite are stacked. Furthermore, it can be also confirmed in the composite active material that some of folds constituting the structure in which the particles of the battery active material capable of combining with lithium ions are sandwiched between the folds consisting of graphite are inclined at an almost right angle from a vertical axis direction of a flat surface, the some of folds being positioned other than at a vicinity of both ends in the longitudinal direction in the cross section of the composite active material and the structure in which the particles of the battery active material capable of combining with lithium ions are sandwiched between the folds consisting of graphite has an orientation that is generally parallel with the flat surface.

In addition, as a result of calculating the average particle diameter of particles of metal Si as the battery active material from the SEM cross-sectional image, the average particle diameter was identical to the measured value before the mixing step.

Next, a half cell and a full cell were prepared in the same procedure as in Example B1 using the obtained composite active material, and various evaluations were performed.

### (Battery Evaluation: Irreversible Capacity)

The charge-discharge capacity of the obtained composite active material was evaluated using the half cell. A capacity confirmation test was performed using both charging and discharging rate of C/20, a cut-off voltage at the charging side of 0.01 V, and a cut-off voltage at the discharging side of 1.5 V. A charge capacity at a first cycle was 1190 mAh/g, a discharge capacity at a first cycle was 1010 mAh/g, and an irreversible capacity thereof was 180 mAh/g.

### (Battery Evaluation: Charge-Discharge Capacity and Cycle Characteristics)

The charge-discharge capacity and cycle characteristics of the obtained composite active material were evaluated using the full cell.

A cycle experiment was performed using both charging and discharging rate of C/3, a cut-off voltage at the charging side of 4.0 V, and a cut-off voltage at the discharging side of 3.0 V. Even after 60 cycles, a maintenance rate of the high discharge capacity of 89% was observed at the charge-discharge cycle.

### (Evaluation: Rate Characteristics)

Rate characteristics of the composite active material were evaluated, using the previously prepared full cell.

Charging was performed at C/10, and discharging was performed at C/20, C/10, C/5, C/2, 1C, 2C, and 4C. The cut-off voltage at the charging side was set to 4.1 V, and the cut-off voltage at the discharging side was set to 2.7 V. The very high discharge capacity as 97% of the discharge capacity obtained at C/20 was obtained at C/10; the very high discharge capacity as 96% of the discharge capacity obtained at C/20 was obtained at C/5; the very high discharge capacity as 92% of the discharge capacity obtained at C/20 was obtained at C/2; the very high discharge capacity as 88% of the discharge capacity obtained at C/20 was obtained at 1C; the very high discharge capacity as 82% of the discharge capacity obtained at C/20 was obtained at 2C, and the very high discharge capacity as 65% of the discharge capacity obtained at C/20 was obtained even at 4C, thus it was confirmed that this material had very good rate characteristics.

### <<Second Aspect>>

### <Example C1, Aspect A>

### (Preparation of Expanded Graphite)

Flake natural graphite having an average particle diameter of 1 mm was immersed in a mixed acid of 9 parts by mass of sulfuric acid and 1 part by mass of nitric acid at room temperature for 1 hour, thereafter the mixed acid was removed with No. 3 glass filter to obtain acid treated graphite. Furthermore, the acid treated graphite was washed with water and then dried. When 5 g of the dried acid treated graphite was stirred in 100 g of distilled water, and the pH was measured after 1 hour, pH was 6.7. The dried acid treated graphite was put into a vertical electric furnace under a nitrogen atmosphere set at 850°C, to obtain expanded graphite. The bulk density of the acid treated graphite was 0.78 g/cm³. The specific surface area of the expanded graphite was 26 m²/g, and the bulk specific gravity was 0.035 g/cm³.

### (Mixing Step)

Ethanol slurry (solid concentration 26.6%, 15.04 parts by mass) of silicon fine powder having an average particle diameter of 0.3 µm was put into 1600 parts by mass of ethanol in a beaker, a phenol resin (carbonization degree 40%, 5 parts by mass) as a carbon precursor and a magnesium nitrate hexahydrate (0.2 parts by mass) as a metal oxide precursor were added thereto, and then an ultrasonic treatment was carried out for 10 minutes while stirring was carried out.

The expanded graphite (14 parts by mass) was added to the ethanol solution in which the silicon fine powder, the phenol resin, and the magnesium nitrate hexahydrate were dispersed, and thus uniform mixture slurry containing the expanded graphite, the silicon fine powder, the phenol resin, and the magnesium nitrate hexahydrate was prepared. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment and thermal decomposition of magnesium nitrate into magnesium oxide was carried out at the same time when the spherical mixture was heated at 900°C for one hour while nitrogen flowed (1 L/min). Thus, a generally spherical composite active material for lithium secondary batteries was obtained in which the content of graphite was 70 parts by mass, the content of silicon was 20 parts by mass, the content of a hard carbon derived from the phenol resin was 10 parts by mass, and the content of the magnesium oxide derived from the magnesium nitrate was 0.16 parts by mass.

The physical properties thereof were as follows. Bulk density: 0.68 g/cm³, tap density: 1.22 g/cm³, particle size distribution D90: 41 µm, D50: 18 µm, D10: 4.7 µm, specific surface area: 32.7 m²/g, and shape: average aspect ratio: 1.35.

When the distribution state of elements was observed using EDX, a state where magnesium (in the form of magnesium oxide) is uniformly dispersed around the silicon was observed. That is, the surface of the silicon was covered with the magnesium oxide.

In addition, from a secondary electron image of the composite active material observed using SEM (scanning electron microscope) at a low accelerating voltage of 10 kV or less, it was possible to directly observe in the composite active material that it was a structure in which the silicon is sandwiched with a thin graphite layer. Also, it could be confirmed at the same time that there was very little component other than the graphite exposed to the surface, and the graphite edge surface was not present on the surface of the composite active material.

More specifically, the area ratio of the graphite that was exposed to the surface of the composite active material for lithium secondary batteries observed by SEM observation was 98%, and the area ratio of the exposed silicon was 2% or less.

### (Negative Electrode Production)

91.5 parts by mass of the composite active material, 62 parts by mass of a PVDF containing NMP solution (PVDF (polyvinylidene fluoride) (content: 13%), 0.5 parts by mass of conductive carbon black, and 29 parts by mass of NMP were weighed, and mixed for 3 minutes using a double arm mixer to prepare a coating slurry. This slurry was coated on a copper foil and dried to produce a negative electrode.

### (Positive Electrode Production)

84 parts by mass of LiNi_{1-x-y}COₓAl_{y}O₂, 66 parts by mass of a PVDF containing NMP solution (PVDF (polyvinylidene fluoride) (content: 12%), 8 parts by mass of conductive carbon black, and 29 parts by mass of NMP were weighed, and mixed for 3 minutes using a double arm mixer to prepare a coating slurry. This slurry was coated on an aluminum foil and dried to produce a positive electrode.

### (Full Cell Production)

Using the negative electrode and the positive electrode described above as electrodes, a full cell was prepared by adding a LiPF₆ electrolyte with ethylene carbonate : diethyl carbonate = 1 : 1, 1.2 mol/L and 2% by volume of fluoroethylene carbonate, and the following battery evaluation was performed.

### (Battery Evaluation: Electrode Expansion Measurement)

After a cycle test was carried out using the full cell, the cell was decomposed and the electrodes were removed, thereby measuring the change in thickness of the electrodes (electrode expansion rate) {(thickness of electrode after the test - thickness of electrode before the test)/ thickness of electrode before the test × 100}. The cycle tests (60 times) was performed using both charging and discharging rate of C/3 (0.18 mA), a cut-off voltage at the charging side of 4.2 V, and a cut-off voltage at the discharging side of 3.0 V.

The electrodes before the test had a disk shape having a diameter of 14 mm and a thickness of 55 µm. The thickness is an average value which is obtained by measuring the thickness of the center of the disk and the thicknesses of any other three points and arithmetically averaging these thicknesses. In addition, the thickness of the electrodes after the cycle test is also a value by measuring the thickness of the center of the disk and the thicknesses of any other three points and arithmetically averaging these thicknesses in the same manner. As described above, using the thickness of the electrodes before the cycle test as a reference, the electrode expansion rate is a value obtained by dividing an increase amount by a reference value.

Further, in the cycle experiment, a capacity maintenance rate at a 60-th cycle was measured using a discharge capacity average value (mAh) at a second cycle as a reference.

In addition, coulombic efficiency at the 60-th cycle was also together measured.

Results are summarized in Table 1.

### <Example C2 (Aspect B)>

### (Mixing Step)

Ethanol slurry (solid concentration 26.6%, 15.04 parts by mass) of silicon fine powder having an average particle diameter of 0.3 µm was put into 1600 parts by mass of ethanol in a beaker, a phenol resin (carbonization degree 40%, 5 parts by mass) as a carbon precursor was added thereto, and then an ultrasonic treatment was carried out for 10 minutes while stirring was carried out.

The expanded graphite (14 parts by mass) was added to the ethanol solution in which the silicon fine powder and the phenol resin were dispersed, and thus uniform mixture slurry containing the expanded graphite, the silicon fine powder, and the phenol resin was prepared. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment at the same time when the spherical mixture was heated at 900°C for one hour while nitrogen flowed (1 L/min). Thus, a generally spherical composite active material for lithium secondary batteries was obtained in which the content of graphite was 70 parts by mass, the content of silicon was 20 parts by mass, and the content of a hard carbon derived from the phenol resin was 10 parts by mass.

### (Introduction of Metal Oxide Precursor)

The generally spherical composite active material for lithium secondary batteries (20 parts by mass) obtained above was added to a solution in which magnesium nitrate hexahydrate (0.2 parts by mass) as a metal oxide precursor was dissolved in an ethanol (500 parts by mass) and then the ethanol was removed using an evaporator after stirring was carried out for 10 minutes.

### (Metal Oxide Formation)

The thermal decomposition of magnesium nitrate into magnesium oxide was carried out at the same time when the spherical mixture was heated at 600°C for one hour while nitrogen flowed (1 L/min). Thus, a generally spherical composite active material for lithium secondary batteries was obtained in which the content of graphite was 70 parts by mass, the content of silicon was 20 parts by mass, the content of a hard carbon derived from the phenol resin was 10 parts by mass, and the content of the magnesium oxide derived from the magnesium nitrate was 0.16 parts by mass.

The physical properties thereof were as follows. Bulk density: 0.67 g/cm³, tap density: 1.20 g/cm³, particle size distribution D90: 40 µm, D50: 19 µm, D10: 4.3 µm, specific surface area: 30.7 m²/g, and shape: average aspect ratio: 1.33.

When the distribution state of elements was observed using EDX, a state where magnesium (in the form of magnesium oxide) is uniformly dispersed around the silicon was observed. That is, the surface of the silicon was covered with the magnesium oxide.

In addition, from a secondary electron image of the composite active material observed using SEM (scanning electron microscope) at a low accelerating voltage of 10 kV or less, it was possible to directly observe in the composite active material that it was a structure in which the silicon is sandwiched with a thin graphite layer.

More specifically, the area ratio of the silicon that was exposed to the surface of the composite active material for lithium secondary batteries observed by SEM observation was 2% or less.

Using the obtained composite active material for lithium secondary batteries, a full cell was produced in the same procedure as in Example 1, the evaluation described above (battery evaluation: electrode expansion measurement) was carried out. Results are summarized in Table 1.

### <Example C3 (Aspect A, Covering with Inorganic Solid Electrolyte (Lithium titanate))>

### (Mixing Step)

Ethanol slurry (solid concentration 26.6%, 15.04 parts by mass) of silicon fine powder having an average particle diameter of 0.3 µm was put into 1600 parts by mass of ethanol in a beaker, a phenol resin (carbonization degree 40%, 5 parts by mass) as a carbon precursor, tetraisopropoxytitanium (0.619 parts by mass) as a solid electrolyte precursor, and lithium acetate dihydrate (0.1778 parts by mass) were added thereto, and then an ultrasonic treatment was carried out for 10 minutes while stirring was carried out. During the stirring, the tetraisopropoxytitanium was converted into titanium oxide by a sol-gel reaction and became lithium titanate incorporating lithium ions therein by further reacting with the lithium acetate.

The expanded graphite (14 parts by mass) was added to an ethanol in which the silicon fine powder, the phenol resin, and the lithium titanate were dispersed, and thus uniform mixture slurry containing the expanded graphite, the silicon fine powder, the phenol resin, and the lithium titanate was prepared. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment and a calcinig treatment of the lithium titanate was carried out at the same time when the spherical mixture was heated at 900°C for one hour while nitrogen flowed (1 L/min). Thus, a generally spherical composite active material for lithium secondary batteries was obtained in which the content of graphite was 70 parts by mass, the content of silicon was 20 parts by mass, the content of a hard carbon derived from the phenol resin was 10 parts by mass, and the content of the lithium titanate was 1 part by mass.

The physical properties thereof were as follows. Bulk density: 0.58 g/cm³, tap density: 1.02 g/cm³, particle size distribution D90: 61 µm, D50: 28 µm, D10: 6.8 µm, specific surface area: 22.5 m²/g, and shape: average aspect ratio: 1.23.

When the distribution state of elements was observed using EDX, a state where titanium (in the form of lithium titanate) is uniformly dispersed around the silicon was observed. That is, the surface of the silicon was covered with the lithium titanate.

In addition, from a secondary electron image of the composite active material observed using SEM (scanning electron microscope) at a low accelerating voltage of 10 kV or less, it was possible to directly observe in the composite active material that it was a structure in which the silicon is sandwiched with a thin graphite layer. Also, it could be confirmed at the same time that there was very little component other than the graphite exposed to the surface, and the graphite edge surface was not present on the surface of the composite active material.

More specifically, the area ratio of the graphite that was exposed to the surface of the composite active material for lithium secondary batteries observed by SEM observation was 98%, and the area ratio of the exposed silicon was 2% or less.

Using the obtained composite active material for lithium secondary batteries, a full cell was produced in the same procedure as in Example 1, the evaluation described above (battery evaluation: electrode expansion measurement) was carried out. Results are summarized in Table 1.

### <Example C4 (Aspect A, Covering with Inorganic Solid Electrolyte (lithium silicate))>

### (Mixing Step)

Ethanol slurry (solid concentration 26.6%, 15.04 parts by mass) of silicon fine powder having an average particle diameter of 0.3 µm was put into 1600 parts by mass of ethanol in a beaker, a phenol resin (carbonization degree 40%, 5 parts by mass) as a carbon precursor, tetraethoxysilane (0.3477 parts by mass) as a solid electrolyte precursor, and lithium acetate dihydrate (0.681 parts by mass) were added thereto, and then an ultrasonic treatment was carried out for 10 minutes while stirring was carried out. During the stirring, tetraethoxysilane was converted into silica by the sol-gel reaction and became lithium silicate incorporating lithium ions therein by further reacting with the lithium acetate.

The expanded graphite (14 parts by mass) was added to an ethanol in which the silicon fine powder, the phenol resin, and the lithium silicate were dispersed, and thus uniform mixture slurry containing the expanded graphite, the silicon fine powder, the phenol resin, and the lithium silicate was prepared. The ethanol was recovered from this slurry using an evaporator to obtain a powder mixture.

### (Pressing Step)

The powder mixture was subjected to a pressing treatment using three rollers (EKAKT50). By this treatment, the expanded graphite layer, which has been opened, can be closed, the interlayer distance can be shortened, the density can also increase, and collision energy in the subsequent spheroidization step can increase, thereby improving efficiency of the spheroidization.

### (Spheroidization Step)

Using New Power Mill, PM-2005M-1380W (Osaka Chemical Co., Ltd.) (Rotational speed: 20000 rpm, Treatment time: 10 times based on 90 seconds), the powder mixture obtained above was granulated and molded into a spherical shape.

### (Calcinig and Carbonizing Treatment)

The phenol resin was subjected to a carbonizing treatment and a calcinig treatment of the lithium silicate was carried out at the same time when the spherical mixture was heated at 900°C for one hour while nitrogen flowed (1 L/min). Thereby, a generally spherical composite active material for lithium secondary batteries was obtained in which the content of graphite was 70 parts by mass, the content of silicon was 20 parts by mass, the content of a hard carbon derived from the phenol resin was 10 parts by mass, and the content of the lithium silicate was 0.16 part by mass.

The physical properties thereof were as follows. Bulk density: 0.54 g/cm³, tap density: 0.92 g/cm³, particle size distribution D90: 58 µm, D50: 25 µm, D10: 6.5 µm, specific surface area: 18.5 m²/g, and shape: average aspect ratio: 1.26.

In addition, from a secondary electron image of the composite active material observed using SEM (scanning electron microscope) at a low accelerating voltage of 10 kV or less, it was possible to directly observe in the composite active material that it was a structure in which the silicon is sandwiched with a thin graphite layer. Also, it could be confirmed at the same time that there was very little component other than the graphite exposed to the surface, and the graphite edge surface was not present on the surface of the composite.

More specifically, the area ratio of the graphite that was exposed to the surface of the composite active material for lithium secondary batteries observed by SEM observation was 98%, and the area ratio of the exposed silicon was 2% or less.

Using the obtained composite active material for lithium secondary batteries, a full cell was produced in the same procedure as in Example 1, the evaluation described above (battery evaluation: electrode expansion measurement) was carried out. Results are summarized in Table 1.

### [Table 1]

**Table 1**

| | Discharge capacity average value (mAh) (Second cycle) | Discharge capacity average value (mAh) (60th cycle) | Capacity maintenance rate (%) | Coulombic efficiency (60th cycle) | Electrode expansion rate (60th cycle) |
|---|---|---|---|---|---|
| Example C1 | 1.88 | 1.67 | 88.8 | 99.4 | 130% |
| Example C2 | 2.17 | 1.77 | 81.5 | 99.1 | 10.7% |
| Example C3 | 2.59 | 1.86 | 71.8 | 99.2 | 94.7% |
| Example C4 | 2.49 | 2.07 | 83.1 | 99.4 | 126% |

As indicated in Table 1 described above, it was confirmed that the full cell using the composite active material for lithium secondary batteries of the present invention exhibited an excellent capacity maintenance rate and coulombic efficiency and had excellent cycle characteristics. It was confirmed that the composite active material (Example C2) obtained in Aspect B had a small electrode expansion rate. In addition, it was confirmed in the electrodes containing the composite active material that the expansion was also suppressed.

## Claims

1. A composite active material for lithium secondary batteries which is produced by a method comprising:
a mixing step of mixing expanded graphite and the battery active material capable of combining with lithium ions with each other to obtain a mixture, wherein the battery active material is mixed in an amount of 10 to 230 parts by mass based on 100 parts by mass of the graphite;
a compression step of compressing the mixture with an unidirectional press to obtain a compressed mixture; and
a spheroidization step of subjecting the compressed mixture to a spheroidization treatment, and
the composite active material for lithium secondary batteries is constituted by flat-shaped particles having any of a rounded disk shape, a flattened ellipsoidal body shape, or a broad bean-type shape,
the flat-shaped particles include structures in which particles of a battery active material capable of combining with lithium ions are sandwiched between folds consisting of graphite,
the battery active material capable of combining with lithium ions has an average particle diameter of 1 µm or less, defined as volume-based particle size distribution value of 50% and measured according to the description,
in a cross section vertical to the flat surface of the flat-shaped particles, some of the folds consisting of graphite are inclined from a vertical axis direction to the flat surface, the some of the folds being positioned other than at a vicinity of both ends in the longitudinal direction in the cross section, wherein the flat surface is the surface viewed from above in a state where the flat-shaped particles are placed on an even surface,
the structures in which the particles of the battery active material capable of combining with lithium ions are sandwiched between the folds consisting of graphite are stacked in parallel generally with the flat surface,
an area ratio of a particle layer of the battery active material capable of combining with lithium ions exposed onto a surface of the composite active material for lithium secondary batteries, as measured by scanning electron microscope (SEM) observation at an accelerating voltage of 10 kV or less, is 5% or less.

2. The composite active material for lithium secondary batteries according to claim 1, wherein the battery active material capable of combining with lithium ions contains at least one element selected from the group consisting of elements of Group 13 on a periodic table, elements of Group 14 on the periodic table, elements of Group 15 on the periodic table, magnesium, and manganese.

3. The composite active material for lithium secondary batteries according to claim 1 or 2, wherein the battery active material capable of combining with lithium ions is a silicon particle.

4. The composite active material for lithium secondary batteries according to claim 3, wherein the silicon particle has an average particle diameter of 100 nm or less, defined as volume-based particle size distribution value of 50% and measured according to the description.

5. A method for producing the composite active material for lithium secondary batteries according to any one of claims 1 to 4, comprising:
a mixing step of mixing expanded graphite and the battery active material capable of combining with lithium ions with each other to obtain a mixture, wherein the battery active material is mixed in an amount of 10 to 230 parts by mass based on 100 parts by mass of the graphite;
a compression step of compressing the mixture with an unidirectional press to obtain a compressed mixture; and
a spheroidization step of subjecting the compressed mixture to a spheroidization treatment.

6. The method for producing the composite active material for lithium secondary batteries according to claim 5, wherein the battery active material capable of combining with lithium ions is a silicon particle, and
the method further includes, before the mixing step, a particle forming step of subjecting silicon monoxide to a heating treatment, forming a composite containing silicon particles and silicon dioxide, and removing the silicon dioxide, to obtain the silicon particles.

7. The method for producing the composite active material for lithium secondary batteries according to claim 5, the method comprising:
a mixing step of mixing expanded graphite and silicon dioxide particles with each other to obtain a first mixture;
a reduction step of mixing the first mixture and a reducing agent with each other to obtain a second mixture containing silicon particles obtained by reduction of the silicon dioxide particles;
a compression step of compressing the second mixture using a unidirectional press to obtain a compressed mixture; and
a spheroidization step of subjecting the compressed mixture to a spheroidization treatment.

8. A method for producing a composite active material for lithium secondary batteries, comprising:
a mixing step of mixing
at least one kind selected from the group consisting of a metal oxide, a metal oxide precursor, an inorganic solid electrolyte, and an inorganic solid electrolyte precursor,
graphite having a specific surface area of 10 m²/g or more, measured using the BET method with nitrogen adsorption, JIS Z 8830, one-point method,
battery active material capable of combining with lithium ions, and
a carbon precursor
with each other, to obtain a mixture;
a pressing step of the mixture;
a spheroidization step of subjecting the mixture to a spheroidization treatment; and
a heating step of subjecting the product obtained in the spheroidization step to a heating treatment,
wherein (i)the metal oxide precursor, the inorganic solid electrolyte precursor and the carbon precursor are transformed into the metal oxide, the inorganic solid electrolyte and the hard carbon, soft carbon or amorphous carbon, respectively, during the heat step; and (ii) that the battery active material is mixed in an amount of 10 to 230 parts by mass, the carbon precursor in an amount of 1 to 50 parts by mass, and the compound selected from the group consisting of a metal oxide, a metal oxide precursor, an inorganic solid electrolyte, and an inorganic solid electrolyte precursor in an amount of 0.0001 to 50 parts by mass, all based on 100 parts by mass of the graphite.

9. A method for producing a composite active material for lithium secondary batteries, comprising:
a mixing step of mixing graphite having a specific surface area of 10 m²/g or more, measured using the BET method with nitrogen adsorption, JIS Z 8830, one-point method, a battery active material capable of combining with lithium ions, and a carbon precursor with each other, to obtain a mixture;
a pressing step of the mixture;
a spheroidization step of subjecting the mixture to a spheroidization treatment;
a heating step of subjecting the product obtained in the spheroidization step to a heating treatment; and
an addition step of contacting the product obtained in the heating step with at least one kind selected from the group consisting of a metal oxide, a metal oxide precursor, an inorganic solid electrolyte, and an inorganic solid electrolyte precursor, to carry out a heating treatment,
wherein (i)the metal oxide precursor, the inorganic solid electrolyte precursor and the carbon precursor are transformed into the metal oxide, the inorganic solid electrolyte and the hard carbon, soft carbon or amorphous carbon, respectively, during the heat step; and
(ii) that the battery active material is mixed in an amount of 10 to 230 parts by mass, the carbon precursor in an amount of 1 to 50 parts by mass, and the compound selected from the group consisting of a metal oxide, a metal oxide precursor, an inorganic solid electrolyte, and an inorganic solid electrolyte precursor in an amount of 0.0001 to 50 parts by mass, all based on 100 parts by mass of the graphite.

10. The method for producing the composite active material for lithium secondary batteries according to claim 8 or 9, wherein metal elements contained in the metal oxide or the metal oxide precursor are at least one element selected from the group consisting of elements of Group 2 on a pe-riodic table, elements of Group 12 on the periodic table, elements of Group 13 on the periodic table, and elements, excluding a carbon element, of Group 14 on the periodic table.

11. The method for producing the composite active material for lithium secondary batteries according to any one of claims 8 to 10, wherein the inorganic solid electrolyte or an inorganic solid electrolyte formed from the inorganic solid electrolyte precursor is a glass ceramic that contains at least a lithium element.

12. The method for producing the composite active material for lithium secondary batteries according to any one of claims 8 to 11, wherein the carbon precursor is at least one selected from the group consisting of a polymer compound, coal-based pitch, petroleum-based pitch, mesophase pitch, coke, low-molecular heavy oil, and derivatives thereof.

13. The method for producing the composite active material for lithium secondary batteries according to any one of claims 8 to 12, wherein the battery active material capable of combining with lithium ions contains at least one element selected from the group consisting of elements of Group 13 on a periodic table, elements of Group 14 on the periodic table, elements of Group 15 on the periodic table, magnesium, and manganese.

14. The method for producing the composite active material for lithium secondary batteries according to any one of claims 8 to 13, wherein the battery active material capable of combining with lithium ions has an average particle diameter of 1 µm or less, measured by a laser diffraction-type particle size distribution analyzer as 50% volume particle diameter D50.

15. A composite active material for lithium secondary batteries which is produced by the method for producing the composite active material of lithium secondary batteries according to any one of claims 8 to 14, comprising at least one inorganic substance selected from the group consisting of a metal oxide and an inorganic solid electrolyte; a graphite component; a battery active material capable of combining with lithium ions; and a hard carbon, soft carbon or amorphous carbon in a content of 1 to 30% by mass; wherein an area ratio of the battery active material capable of combining with the lithium ions exposed onto a surface observed by scanning electron microscope (SEM) observation at an accelerating voltage of 10 kV or less is 5% or less, and the content of the inorganic substance is 0.01 to 30% by mass.

16. The composite active material for lithium secondary batteries according to claim 15, wherein the inorganic substance covers at least a portion of the surface of the graphite component.

17. The composite active material for lithium secondary batteries according to claim 15 or 16, wherein the battery active material capable of combining with lithium ions is a silicon particle having an average particle diameter of 100 nm or less, measured by a laser diffraction-type particle size distribution analyzer as 50% volume particle diameter D50.

18. A lithium secondary battery, **characterized in that**, comprising the composite active material for lithium secondary batteries according to any one of claims 15 to 17.

## Patentansprüche

1. Aktives Verbundmaterial für Lithium-Sekundärbatterien, das durch ein Verfahren hergestellt wird, umfassend:
einen Mischschritt des Mischens von expandiertem Graphit und des aktiven Batteriematerials, das in der Lage ist, sich mit Lithium-Ionen zu kombinieren, um ein Gemisch zu erhalten, wobei das aktive Batteriematerial in einer Menge von 10 bis 230 Massenteilen, bezogen auf 100 Massenteile des Graphits, gemischt wird;
einen Komprimierungsschritt des Komprimierens des Gemisches mit einer unidirektionalen Presse, um ein komprimiertes Gemisch zu erhalten; und
einen Sphäroidisierungsschritt, bei dem das komprimierte Gemisch einer Sphäroidisierungsbehandlung unterzogen wird, und
wobei das aktive Verbundmaterial für Lithium-Sekundärbatterien aus flach geformten Partikeln besteht, die eine abgerundete Scheibenform, eine abgeflachte Ellipsoidkörperform oder eine breite bohnenartige Form aufweisen,
wobei die flach geformten Partikel Strukturen umfassen, in denen Partikel eines aktiven Batteriematerials, das in der Lage ist, sich mit Lithium-Ionen zu kombinieren, zwischen Falten aus Graphit aufgenommen werden,
wobei das aktive Batteriematerial, das in der Lage ist, sich mit Lithium-Ionen zu kombinieren, einen durchschnittlichen Partikeldurchmesser von 1 µm oder weniger, als volumenbasierter Partikelgrößenverteilungswert von 50 % definiert und gemäß der Beschreibung gemessen, aufweist,
wobei in einem Querschnitt vertikal zu der flachen Oberfläche der flach geformten Partikel, einige der aus Graphit bestehenden Falten von einer vertikalen Achsenrichtung zu der flachen Oberfläche hin geneigt sind, wobei die einigen der Falten anders als in der Nähe beider Enden in der Längsrichtung im Querschnitt positioniert sind, wobei die flache Oberfläche die von oben gesehene Oberfläche in einem Zustand ist, in dem die flach geformten Partikel auf einer ebenen Oberfläche angeordnet sind,
wobei die Strukturen, in denen die Partikel des aktiven Batteriematerials, das in der Lage ist, sich mit Lithium-Ionen zu kombinieren, zwischen den aus Graphit bestehenden Falten angeordnet sind, allgemein parallel zu der flachen Oberfläche gestapelt sind,
wobei ein Flächenverhältnis einer Partikelschicht des aktiven Batteriematerials, das in der Lage ist, sich mit Lithium-Ionen zu kombinieren, und auf einer Oberfläche des aktiven Verbundmaterials für Lithium-Sekundärbatterien frei liegt, durch rasterelektronenmikroskopische (REM) Beobachtung bei einer Beschleunigungsspannung von 10 kV oder weniger gemessen, 5 % oder weniger beträgt.

2. Aktives Verbundmaterial für Lithium-Sekundärbatterien nach Anspruch 1, wobei das aktive Batteriematerial, das in der Lage ist, sich mit Lithium-Ionen zu kombinieren, mindestens ein Element enthält, das aus der Gruppe ausgewählt ist, die aus Elementen der Gruppe 13 des Periodensystems, Elementen der Gruppe 14 des Periodensystems, Elementen der Gruppe 15 des Periodensystems, Magnesium und Mangan besteht.

3. Aktives Verbundmaterial für Lithium-Sekundärbatterien nach Anspruch 1 oder 2, wobei das aktive Batteriematerial, das in der Lage ist, sich mit Lithium-Ionen zu kombinieren, ein Siliziumpartikel ist.

4. Aktives Verbundmaterial für Lithium-Sekundärbatterien nach Anspruch 3, wobei der Siliziumpartikel einen durchschnittlichen Partikeldurchmesser von 100 nm oder weniger, als volumenbasierter Partikelgrößenverteilungswert von 50 % definiert und gemäß der Beschreibung gemessen, aufweist.

5. Verfahren zur Herstellung des aktiven Verbundmaterials für Lithium-Sekundärbatterien nach einem der Ansprüche 1 bis 4, umfassend:
einen Mischschritt des Mischens von expandiertem Graphit und des aktiven Batteriematerials, das in der Lage ist, sich mit Lithium-Ionen zu kombinieren, um ein Gemisch zu erhalten, wobei das aktive Batteriematerial in einer Menge von 10 bis 230 Massenteilen, bezogen auf 100 Massenteile des Graphits, gemischt wird;
einen Komprimierungsschritt des Komprimierens des Gemisches mit einer unidirektionalen Presse, um ein komprimiertes Gemisch zu erhalten; und
einen Sphäroidisierungsschritt, bei dem das komprimierte Gemisch einer Sphäroidisierungsbehandlung unterzogen wird.

6. Verfahren zur Herstellung des aktiven Verbundmaterials für Lithium-Sekundärbatterien nach Anspruch 5, wobei das aktive Batteriematerial, das in der Lage ist, sich mit Lithium-Ionen zu kombinieren, ein Siliziumpartikel ist, und
das Verfahren des Weiteren vor dem Mischschritt einen Partikelbildungsschritt umfasst, bei dem Siliziummonoxid einer Wärmebehandlung unterzogen wird, ein Verbundmaterial gebildet wird, das Siliziumpartikel und Siliziumdioxid enthält, und das Siliziumdioxid entfernt wird, um die Siliziumpartikel zu erhalten.

7. Verfahren zur Herstellung des aktiven Verbundmaterials für Lithium-Sekundärbatterien nach Anspruch 5, wobei das Verfahren Folgendes umfasst:
einen Mischschritt, bei dem expandierter Graphit und Siliziumdioxidpartikel miteinander vermischt werden, um ein erstes Gemisch zu erhalten;
einen Reduktionsschritt, bei dem das erste Gemisch und ein Reduktionsmittel miteinander vermischt werden, um ein zweites Gemisch zu erhalten, das Siliziumpartikel enthält, die durch Reduktion der Siliziumdioxidpartikel erhalten wurden;
einen Komprimierungsschritt des Komprimierens des zweiten Gemisches mittels einer unidirektionalen Presse, um ein komprimiertes Gemisch zu erhalten; und
einen Sphäroidisierungsschritt, bei dem das komprimierte Gemisch einer Sphäroidisierungsbehandlung unterzogen wird.

8. Verfahren zur Herstellung eines aktiven Verbundmaterials für Lithium-Sekundärbatterien, umfassend:
einen Mischschritt des Mischens von
mindestens einer Art, die aus der Gruppe ausgewählt ist, die aus einem Metalloxid, einem Metalloxidvorläufer, einem anorganischen Festelektrolyten und einem anorganischen Festelektrolytvorläufer besteht,
Graphit mit einer spezifischen Oberfläche von 10 m²/g oder mehr, gemessen mittels des BET-Verfahrens mit Stickstoffadsorption, JIS Z 8830, Ein-Punkt-Verfahren, batterieaktives Material, das in der Lage ist, sich mit Lithium-Ionen zu kombinieren, und
einem Kohlenstoffvorläufer
miteinander, um ein Gemisch zu erhalten;
einen Schritt des Pressens des Gemisches;
einen Sphäroidisierungsschritt, bei dem das Gemisch einer Sphäroidisierungsbehandlung unterzogen wird, und
einen Erwärmungsschritt, bei dem das in dem Sphäroidisierungsschritt erhaltene Produkt einer Wärmebehandlung unterzogen wird,
wobei
(i) der Metalloxidvorläufer, der anorganische Festelektrolytvorläufer und der Kohlenstoffvorläufer während des Wärmeschrittes in das Metalloxid, den anorganischen Festelektrolyten und den harten Kohlenstoff bzw. den weichen Kohlenstoff oder amorphen Kohlenstoff umgewandelt werden; und
(ii) das aktive Batteriematerial in einer Menge von 10 bis 230 Massenteilen, der Kohlenstoffvorläufer in einer Menge von 1 bis 50 Massenteilen, und die Verbindung, die aus der Gruppe ausgewählt ist, die aus einem Metalloxid, einem Metalloxidvorläufer, einem anorganischen Festelektrolyten und einem anorganischen Festelektrolytvorläufer besteht, in einer Menge von 0,0001 bis 50 Massenteilen, alle bezogen auf 100 Massenteile des Graphits, gemischt wird.

9. Verfahren zur Herstellung eines aktiven Verbundmaterials für Lithium-Sekundärbatterien, umfassend:
einen Mischschritt des Mischens von Graphit mit einer spezifischen Oberfläche von 10 m²/g oder mehr, gemessen mittels des BET-Verfahrens mit Stickstoffadsorption, JIS Z 8830, Ein-Punkt-Verfahren, eines aktiven Batteriematerials, das in der Lage ist, sich mit Lithium-Ionen zu kombinieren, und eines Kohlenstoffvorläufers miteinander, um ein Gemisch zu erhalten;
einen Schritt des Pressens des Gemisches;
einen Sphäroidisierungsschritt, bei dem das Gemisch einer Sphäroidisierungsbehandlung unterzogen wird;
einen Erwärmungsschritt, bei dem das in dem Sphäroidisierungsschritt erhaltene Produkt einer Wärmebehandlung unterzogen wird; und
einen Zusatzschritt des Inkontaktbringens des in dem Erwärmungsschritt erhaltenen Produkts mit mindestens einer Art, die aus der Gruppe ausgewählt ist, die aus einem Metalloxid, einem Metalloxidvorläufer, einem anorganischen Festelektrolyten und einem anorganischen Festelektrolytvorläufer besteht, um eine Erwärmungsbehandlung durchzuführen,
wobei
(i) der Metalloxidvorläufer, der anorganische Festelektrolytvorläufer und der Kohlenstoffvorläufer während des Wärmeschrittes in das Metalloxid, den anorganischen Festelektrolyten und den harten Kohlenstoff bzw. den weichen Kohlenstoff oder amorphen Kohlenstoff umgewandelt werden; und
(ii) das aktive Batteriematerial in einer Menge von 10 bis 230 Massenteilen, der Kohlenstoffvorläufer in einer Menge von 1 bis 50 Massenteilen, und die Verbindung, die aus der Gruppe ausgewählt ist, die aus einem Metalloxid, einem Metalloxidvorläufer, einem anorganischen Festelektrolyten und einem anorganischen Festelektrolytvorläufer besteht, in einer Menge von 0,0001 bis 50 Massenteilen, alle bezogen auf 100 Massenteile des Graphits, gemischt wird.

10. Verfahren zur Herstellung des aktiven Verbundmaterials für Lithium-Sekundärbatterien nach Anspruch 8 oder 9, wobei in dem Metalloxid oder dem Metalloxidvorläufer enthaltene Metallelemente mindestens ein Element sind, das aus der Gruppe ausgewählt ist, die aus Elementen der Gruppe 2 des Periodensystems, Elementen der Gruppe 12 des Periodensystems, Elementen der Gruppe 13 des Periodensystems, und Elementen, außer einem Kohlenstoffelement, der Gruppe 14 des Periodensystems besteht.

11. Verfahren zur Herstellung des aktiven Verbundmaterials für Lithium-Sekundärbatterien nach einem der Ansprüche 8 bis 10, wobei der anorganische Festelektrolyt oder ein anorganischer Festelektrolyt, der aus dem anorganischen Festelektrolytvorläufer gebildet wird, eine Glaskeramik ist, die mindestens ein Lithiumelement enthält.

12. Verfahren zur Herstellung des aktiven Verbundmaterials für Lithium-Sekundärbatterien nach einem der Ansprüche 8 bis 11, wobei der Kohlenstoffvorläufer mindestens einer ist, der aus der Gruppe ausgewählt ist, die aus einer Polymerverbindung, Pech auf Kohlebasis, Pech auf Erdölbasis, Mesophasenpech, Koks, niedermolekularem Schweröl und Derivaten davon besteht.

13. Verfahren zur Herstellung des aktiven Verbundmaterials für Lithium-Sekundärbatterien nach einem der Ansprüche 8 bis 12, wobei das aktive Batteriematerial, das in der Lage ist, sich mit Lithium-Ionen zu kombinieren, mindestens ein Element enthält, das aus der Gruppe ausgewählt ist, die aus Elementen der Gruppe 13 des Periodensystems, Elementen der Gruppe 14 des Periodensystems, Elementen der Gruppe 15 des Periodensystems, Magnesium und Mangan besteht.

14. Verfahren zur Herstellung des aktiven Verbundmaterials für Lithium-Sekundärbatterien nach einem der Ansprüche 8 bis 13, wobei das aktive Batteriematerial, das in der Lage ist, sich mit Lithium-Ionen zu kombinieren, einen durchschnittlichen Partikeldurchmesser von 1 µm oder weniger, mit einem Laserbeugungs-Partikelgrößenverteilungsanalysator als 50 Vol.-% Partikeldurchmesser D50 gemessen, aufweist.

15. Aktives Verbundmaterial für Lithium-Sekundärbatterien, das durch das Verfahren zur Herstellung des aktiven Verbundmaterials von Lithium-Sekundärbatterien nach einem der Ansprüche 8 bis 14 hergestellt wird, enthaltend: mindestens eine anorganische Substanz, die aus der Gruppe ausgewählt ist, die aus einem Metalloxid und einem anorganischen Festelektrolyten besteht; eine Graphitkomponente; ein batterieaktives Material, das in der Lage ist, sich mit Lithium-Ionen zu kombinieren; und einem harten Kohlenstoff, einem weichen Kohlenstoff oder einem amorphen Kohlenstoff mit einem Gehalt von 1 bis 30 Massen-%; wobei ein Flächenverhältnis des aktiven Batteriematerials, das in der Lage ist, sich mit Lithium-Ionen zu kombinieren, und auf einer Oberfläche frei liegt, die durch rasterelektronenmikroskopische (REM) Beobachtung bei einer Beschleunigungsspannung von 10 kV oder weniger beobachtet wird, 5 % oder weniger beträgt, und der Gehalt der anorganischen Substanz 0,01 bis 30 Massen-% beträgt.

16. Aktives Verbundmaterial für Lithium-Sekundärbatterien nach Anspruch 15, wobei die anorganische Substanz mindestens einen Teil der Oberfläche der Graphitkomponente bedeckt.

17. Aktives Verbundmaterial für Lithium-Sekundärbatterien nach Anspruch 15 oder 16, wobei das aktive Batteriematerial, das in der Lage ist, sich mit Lithium-Ionen zu kombinieren, ein Siliziumpartikel mit einem durchschnittlichen Partikeldurchmesser von 100 nm oder weniger ist, mit einem Laserbeugungs-Partikelgrößenverteilungsanalysator als 50 Vol.-% Partikeldurchmesser D50 gemessen.

18. Lithium-Sekundärbatterie, **dadurch gekennzeichnet, dass** sie das aktive Verbundmaterial für Lithium-Sekundärbatterien nach einem der Ansprüche 15 bis 17 enthält.

## Revendications

1. Matériau composite actif pour des batteries secondaires au lithium, qui est produit par un procédé comprenant :
une étape de mélange consistant à mélanger du graphite expansé et le matériau actif de batterie capable de se combiner avec des ions lithium l'un avec l'autre pour obtenir un mélange, dans lequel le matériau actif de batterie est mélangé en une quantité de 10 à 230 parties en masse pour 100 parties en masse du graphite;
une étape de compression consistant à compresser le mélange avec une presse unidirectionnelle pour obtenir un mélange compressé; et
une étape de sphéroïdisation consistant à soumettre le mélange comprimé à un traitement de sphéroïdisation, et le matériau actif composite pour des batteries secondaires au lithium est constitué de particules de forme plate présentant l'une d'une forme de disque arrondi, d'une forme de corps elliptique aplati ou d'une forme générale en forme de haricot,
les particules de forme plate comprennent des structures dans lesquelles des particules d'un matériau actif de batterie capable de se combiner avec des ions lithium sont prises en sandwich entre des plis constitués de graphite, le matériau actif de batterie capable de se combiner avec des ions lithium a un diamètre moyen de particule de 1 µm ou moins, défini en tant que valeur de distribution granulométrique basée sur le volume de 50 % et mesurée conformément à la description,
dans une section transversale perpendiculaire à la surface plane des particules de forme plate, une partie des plis constitués de graphite sont inclinés par rapport à une direction d'axe vertical de la surface plane, ladite partie des plis étant positionnée ailleurs que dans un voisinage des deux extrémités dans la direction longitudinale dans la section transversale, dans lequel la surface plane est la surface vue de dessus dans un état où les particules de forme plate sont placées sur une surface plane,
les structures dans lesquelles les particules du matériau actif de batterie capable de se combiner avec des ions lithium sont prises en sandwich entre les plis constitués de graphite sont empilées en parallèle généralement avec la surface plane,
un rapport de surface d'une couche de particules du matériau actif de batterie capable de se combiner avec des ions lithium exposée sur une surface du matériau actif composite pour des batteries secondaires au lithium, tel que mesuré par une observation au microscope électronique à balayage (SEM) à une tension d'accélération de 10 kV ou moins, est de 5 % ou moins.

2. Matériau actif composite pour des batteries secondaires au lithium selon la revendication 1, dans lequel le matériau actif de batterie capable de se combiner avec des ions lithium contient au moins un élément choisi dans le groupe constitué par des éléments du groupe 13 sur un tableau périodique, des éléments du groupe 14 sur le tableau périodique, des éléments du groupe 15 sur le tableau périodique, le magnésium et le manganèse.

3. Matériau actif composite pour des batteries secondaires au lithium selon la revendication 1 ou 2, dans lequel le matériau actif de batterie capable de se combiner avec des ions lithium est une particule de silicium.

4. Matériau actif composite pour des batteries secondaires au lithium selon la revendication 3, dans lequel la particule de silicium a un diamètre moyen de particule de 100 nm ou moins, défini en tant que valeur de distribution granulométrique basée sur le volume de 50 % et mesurée selon la description.

5. Procédé de fabrication du matériau actif composite pour des batteries secondaires au lithium selon l'une quelconque des revendications 1 à 4, comprenant :
une étape de mélange consistant à mélanger du graphite expansé et le matériau actif de batterie capable de se combiner avec des ions lithium l'un avec l'autre pour obtenir un mélange, dans lequel le matériau actif de batterie est mélangé en une quantité de 10 à 230 parties en masse pour 100 parties en masse du graphite;
une étape de compression consistant à compresser le mélange avec une presse unidirectionnelle pour obtenir un mélange compressé; et
une étape de sphéroïdisation consistant à soumettre le mélange compressé à un traitement de sphéroïdisation.

6. Procédé de fabrication du matériau actif composite pour des batteries secondaires au lithium selon la revendication 5, dans lequel le matériau actif de batterie capable de se combiner avec des ions lithium est une particule de silicium, et
le procédé comprend en outre, avant l'étape de mélange, une étape de formation de particules consistant à soumettre du monoxyde de silicium à un traitement de chauffage, former un composite contenant des particules de silicium et du dioxyde de silicium, et éliminer le dioxyde de silicium, pour obtenir des particules de silicium.

7. Procédé de fabrication du matériau actif composite pour des batteries secondaires au lithium selon la revendication 5, le procédé comprenant :
une étape de mélange consistant à mélanger du graphite expansé et des particules de dioxyde de silicium l'un avec l'autre pour obtenir un premier mélange;
une étape de réduction consistant à mélanger le premier mélange et un agent réducteur l'un avec l'autre pour obtenir un second mélange contenant des particules de silicium obtenues par réduction des particules de dioxyde de silicium;
une étape de compression consistant à compresser le second mélange en utilisant une presse unidirectionnelle pour obtenir un mélange compressé; et
une étape de sphéroïdisation consistant à soumettre le mélange compressé à un traitement de sphéroïdisation.

8. Procédé de production d'un matériau composite actif pour des batteries secondaires au lithium, comprenant :
une étape de mélange consistant à mélanger
au moins un type choisi dans le groupe constitué par un oxyde métallique, un précurseur d'oxyde métallique, un électrolyte solide inorganique et un précurseur d'électrolyte solide inorganique,
du graphite ayant une surface spécifique de 10 m²/g ou plus, mesurée en utilisant la méthode BET avec la méthode à un point d'adsorption d'azote, JIS Z 8830,
un matériau actif de batterie capable de se combiner avec des ions lithium, et
un précurseur de carbone
les uns avec les autres, pour obtenir un mélange;
une étape de pressage du mélange;
une étape de sphéroïdisation consistant à soumettre le mélange à un traitement de sphéroïdisation ; et
une étape de chauffage consistant à soumettre le produit obtenu dans l'étape de sphéroïdisation à un traitement de chauffage,
dans lequel
(i) le précurseur d'oxyde métallique, le précurseur d'électrolyte solide inorganique et le précurseur de carbone sont transformés en l'oxyde métallique, l'électrolyte solide inorganique et le carbone dur, le carbone tendre ou le carbone amorphe, respectivement, au cours de l'étape de chauffage; et
(ii) le matériau actif de batterie est mélangé en une quantité de 10 à 230 parties en masse, le précurseur de carbone en une quantité de 1 à 50 parties en masse, et le composé choisi dans le groupe constitué par un oxyde métallique, un précurseur d'oxyde métallique, un électrolyte solide inorganique et un précurseur d'électrolyte solide inorganique en une quantité de 0,0001 à 50 parties en masse, tous basés sur 100 parties en masse du graphite.

9. Procédé de production d'un matériau composite actif pour des batteries secondaires au lithium, comprenant :
une étape de mélange consistant à mélanger du graphite ayant une surface spécifique de 10 m²/g ou plus, mesurée par la méthode BET avec la méthode à un point d'adsorption d'azote, JIS Z 8830, un matériau actif de batterie capable de se combiner avec des ions lithium, et un précurseur de carbone les uns avec les autres, pour obtenir un mélange;
une étape de pressage du mélange;
une étape de sphéroïdisation consistant à soumettre le mélange à un traitement de sphéroïdisation;
une étape de chauffage consistant à soumettre le produit obtenu dans l'étape de sphéroïdisation à un traitement de chauffage; et
une étape d'addition consistant à mettre en contact le produit obtenu dans l'étape de chauffage avec au moins un type choisi dans le groupe constitué par un oxyde métallique, un précurseur d'oxyde métallique, un électrolyte solide inorganique et un précurseur d'électrolyte solide inorganique, pour procéder à un traitement de chauffage,
dans lequel
(i) le précurseur d'oxyde métallique, le précurseur d'électrolyte solide inorganique et le précurseur de carbone sont transformés en l'oxyde métallique, l'électrolyte solide inorganique et le carbone dur, le carbone tendre ou le carbone amorphe, respectivement, au cours de l'étape de chauffage; et
(ii) le matériau actif de batterie est mélangé en une quantité de 10 à 230 parties en masse, le précurseur de carbone en une quantité de 1 à 50 parties en masse, et le composé choisi dans le groupe constitué par un oxyde métallique, un précurseur d'oxyde métallique, un électrolyte solide inorganique et un précurseur d'électrolyte solide inorganique en une quantité de 0,0001 à 50 parties en masse, tous basés sur 100 parties en masse du graphite.

10. Procédé de fabrication du matériau actif composite pour des batteries secondaires au lithium selon la revendication 8 ou 9, dans lequel des éléments métalliques contenus dans l'oxyde métallique ou le précurseur d'oxyde métallique sont au moins un élément choisi dans le groupe constitué par des éléments du groupe 2 sur un tableau périodique, des éléments du groupe 12 sur le tableau périodique, des éléments du groupe 13 sur le tableau périodique, et des éléments, à l'exclusion d'un élément de carbone, du groupe 14 sur le tableau périodique.

11. Procédé de fabrication du matériau actif composite pour des batteries secondaires au lithium selon l'une quelconque des revendications 8 à 10, dans lequel l'électrolyte solide inorganique ou un électrolyte solide inorganique formé à partir du précurseur d'électrolyte solide inorganique est une céramique de verre qui contient au moins un élément de lithium.

12. Procédé de fabrication du matériau actif composite pour des batteries secondaires au lithium selon l'une quelconque des revendications 8 à 11, dans lequel le précurseur de carbone est au moins un élément choisi dans le groupe constitué par un composé polymère, un brai à base houille, un brai à base de pétrole, un brai de mésophase, du coke, de l'huile lourde de faible poids moléculaire, et des dérivés de ceux-ci.

13. Procédé de fabrication du matériau actif composite pour des batteries secondaires au lithium selon l'une quelconque des revendications 8 à 12, dans lequel le matériau actif de batterie capable de se combiner avec des ions lithium contient au moins un élément choisi dans le groupe constitué par des éléments du groupe 13 sur un tableau périodique, des éléments du groupe 14 sur le tableau périodique, des éléments du groupe 15 sur le tableau périodique, le magnésium et le manganèse.

14. Procédé de fabrication du matériau actif composite pour des batteries secondaires au lithium selon l'une quelconque des revendications 8 à 13, dans lequel le matériau actif de batterie capable de se combiner avec des ions lithium a un diamètre moyen de particule de 1 µm ou moins, mesuré par un analyseur de distribution granulométrique du type à diffraction laser en tant que diamètre de particule en volume de 50 %, D50.

15. Matériau composite actif pour des batteries secondaires au lithium, qui est produit par le procédé de fabrication du matériau actif composite de batteries secondaires au lithium selon l'une quelconque des revendications 8 à 14, comprenant au moins une substance inorganique choisie dans le groupe constitué par un oxyde métallique et un électrolyte solide inorganique; un composant de graphite; un matériau actif de batterie capable de se combiner avec des ions lithium; et un carbone dur, un carbone tendre ou un carbone amorphe en une teneur de 1 à 30 % en masse ; dans lequel un rapport de surface du matériau actif de batterie capable de se combiner avec les ions lithium exposé sur une surface observée par une observation au microscope électronique à balayage (SEM) à une tension d'accélération de 10 kV ou moins est de 5 % ou moins, et la teneur de la substance inorganique est de 0,01 à 30 % en masse.

16. Matériau composite actif pour des batteries secondaires au lithium selon la revendication 15, dans lequel la substance inorganique couvre au moins une partie de la surface du composant de graphite.

17. Matériau composite actif pour des batteries secondaires au lithium selon la revendication 15 ou 16, dans lequel le matériau actif de batterie capable de se combiner avec des ions lithium est une particule de silicium ayant un diamètre moyen de particule de 100 nm ou moins, mesuré par un analyseur de distribution granulométrique du type à diffraction laser en tant que diamètre de particule en volume de 50 %, D50.

18. Batterie secondaire au lithium, **caractérisée en ce qu'**elle comprend le matériau actif composite pour des batteries secondaires au lithium selon l'une quelconque des revendications 15 à 17.
